# EUROPEAN PATENT APPLICATION

(11) **EP 4 852 433 A1**
(43) Date of publication of application: **09.12.2026**
(21) Application number: 25305825.9
(22) Date of filing: 05.06.2025
(51) Int. Cl.: H04N 19/593, H04N 19/105, H04N 19/11, H04N 19/176, H04N 19/182, H04N 19/523, H04N 19/70

(54) **REDUCING REDUNDANCIES IN SUB-PEL INTRA TEMPLATE MATCHING PREDICTION**

(71) Applicant: InterDigital CE Patent Holdings, SAS, 75017 Paris (FR)
(72) Inventor: DUMAS, Thierry, 35700 Rennes (FR); CHEN, Ya, 35700 Rennes (FR); RADOSAVLJEVIC, Milos, 35000 Rennes (FR); NASER, Karam, 35250 Mouaze (FR)
(74) Representative: Rittner, Karsten

(57) **Abstract**

Systems, methods, and instrumentalities associated with reducing redundancies in sub-pel intra template matching prediction. A device (e.g., a video decoding device) may include a processor configured to select a sub-pixel (sub-pel) parameter from a set of sub-pel parameters. The set of sub-pel parameters may be defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block. The device may determine a prediction of a current block based on at least the sub-pel parameter. The device may decode the current block based on the prediction.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities associated with reducing redundancies in sub-pixel (sub-pel) intra template matching prediction. A video decoding device may include a processor configured to select a sub-pixel (sub-pel) parameter from a set of sub-pel parameters. The set of sub-pel parameters may be defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block. The device may determine a prediction of a current block based on at least the sub-pel parameter. The device may decode the current block based on the prediction.

A video encoding device may include a processor configured to select a sub-pixel (sub-pel) parameter from a set of sub-pel parameters. The set of sub-pel parameters may be defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block. The device may determine a prediction of a current block based on at least the sub-pel parameter. The device may encode the current block based on the prediction.

The sub-pel parameter may include a first parameter indicative of a fractional precision and a second parameter indicative of a direction. The sub-pel parameter may include a first parameter indicative of a horizontal fractional precision, a second parameter indicative of a vertical fractional precision, and a third parameter indicative of a direction.

The first sub-pel displacements may include displacements in only a first quadrant of the first ITMP search area of first sub-pel displacements. The second sub-pel displacements may include displacements in only a second quadrant of the second ITMP search area of second sub-pel displacements. The first quadrant and the second quadrant may be a same quadrant within the first ITMP search area and the second ITMP search area, respectively.

The first sub-pel displacements may include displacements at 1/4 pel from the first pixel position and displacements at 3/8 pel from the first pixel position. The second sub-pel displacements may include displacements at 1/4 pel from the second pixel position and displacements at 3/8 pel from the second pixel position.

The first sub-pel displacements may include displacements at 1/4 pel from the first pixel position and displacements at 1/8 pel from the first pixel position. The second sub-pel displacements may include displacements at 1/4 pel from the second pixel position and displacements at 1/8 pel from the second pixel position.

The current block may be a first current block. The sub-pel parameter may be a first sub-pel parameter. The device (e.g., the video decoding device) may receive an indication of whether sub-pel is used for a second current block. On a condition that the indication indicates that sub-pel is unused for the second current block, the device may refrain from determining a second sub-pel parameter for the second current block. On a condition that the indication indicates that sub-pel is used for the second current block. The device may select a second sub-pixel parameter from the set of sub-pel parameters; determine a prediction of the second current block based on the second sub-pel parameter; and decode the second current block based on the prediction.

The device may perform an intra template matching prediction (ITMP) search of a plurality of templates. The plurality of templates may include the template of the reconstructed block. The ITMP search may identify the reconstructed block. Determining the prediction of the current block may be further based on the reconstructed block.

The device (e.g., the video encoding device) may select the sub-pel parameter from the set of sub-pel parameters by determining respective sums of absolute difference (SADs) between a plurality of reconstructed block templates and a template of the current block. The plurality of templates may include the template of the reconstructed block. The device may sort the respective SADs in order from smallest SAD to largest SAD. The device may select the sub-pel parameter based on the sub-pel parameter being associated with one of two of the respective SADs with the smallest SAD. The device may include, in a bitstream, the encoded current block and an indication of the sub-pel parameter.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows three types of matchings between the template of a ***W*** × ***H*** reconstructed block and the template of a (e.g., the current) ***W*** × ***H*** block to be coded.
FIG. 5 shows a search area for a ***W*** × ***H*** luma coding block (CB) predicted via ITMP.
FIG. 6 shows example extraction of the training examples.
FIG. 7 shows 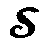 represented as sub-pel displacements of the position of the pixel at the top-left of **refBlock** inside the current luma channel for a given ***W*** × ***H*** luma CB.
FIG. 8 shows support of 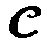 for a reconstructed pixel C inside **refBlockPad,** in the linear filtering model sub-mode of ITMP.
FIG. 9 shows an example extraction of training examples.
FIG. 10 shows example overlap between two sub-pel displacements.
FIG. 11 shows an example of decoding the current block predicted by the combination of ITMP and sub-pel.
FIG. 12 shows an example definition of the domain 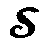 of sub-pel parameters.
FIG. 13 shows another example definition of the domain 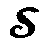 of sub-pel parameters.
FIG. 14 shows yet another example definition of the domain 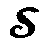 of sub-pel parameters.
FIG. 15 shows an example of decoding the current luma CB predicted by the combination of ITMP and sub-pel.
FIG. 16 shows an example definition of the domain 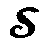 of sub-pel parameters.
FIG. 17 shows another example definition of the domain 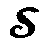 of sub-pel parameters.
FIG. 18 shows yet another example definition of the domain 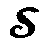 of sub-pel parameters.
FIG. 19 shows an example of decoding the current luma CB predicted by the combination of ITMP and sub-pel.
FIG. 20 shows an example definition of the domain 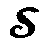 of sub-pel parameters.
FIG. 21 shows another example definition of the domain 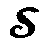 of sub-pel parameters.
FIG. 22 shows yet another example definition of the domain 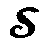 of sub-pel parameters.
FIG. 23 shows yet another example definition of the domain 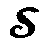 of sub-pel parameters.
FIG. 24 shows an example of decoding the current luma CB predicted by the combination of ITMP and sub-pel.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

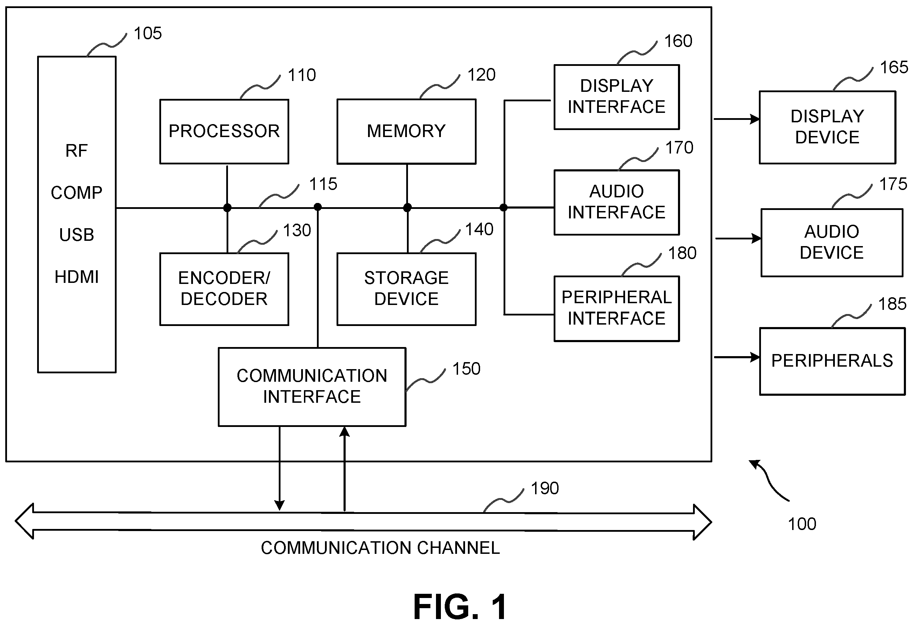

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

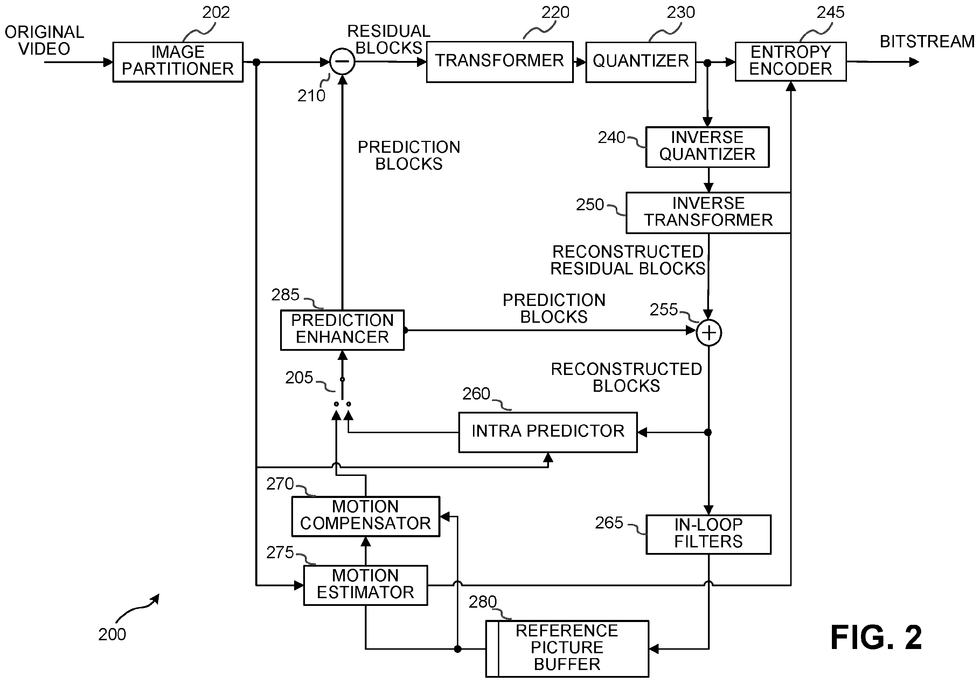

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

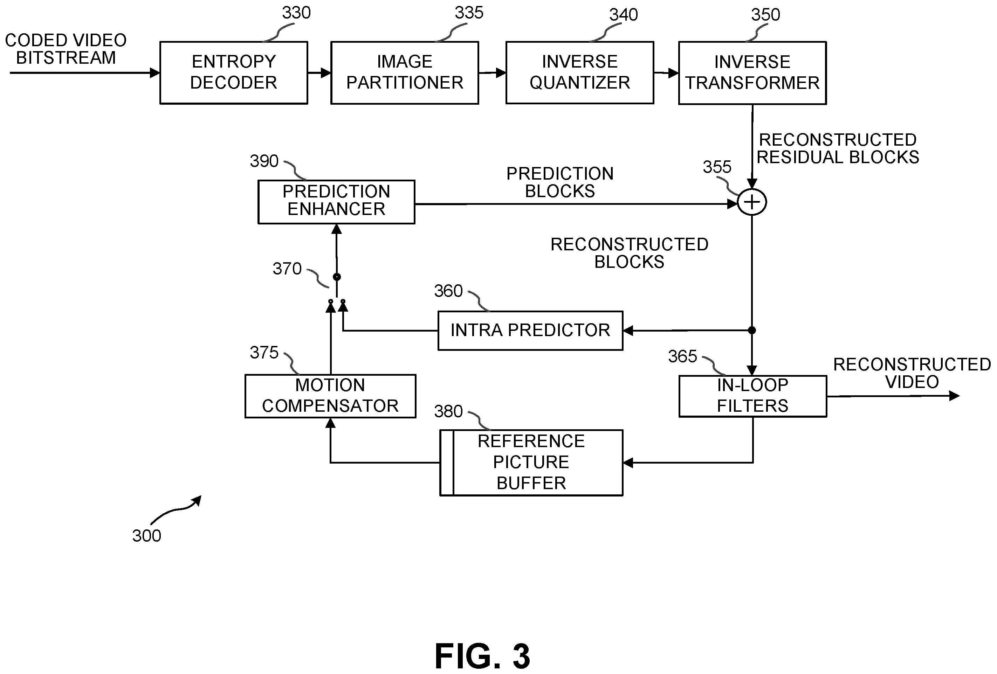

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities associated with reducing redundancies in sub-pixel (sub-pel) intra template matching prediction. A video decoding device may include a processor configured to select a sub-pixel (sub-pel) parameter from a set of sub-pel parameters. The set of sub-pel parameters may be defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block. The device may determine a prediction of a current block based on at least the sub-pel parameter. The device may decode the current block based on the prediction.

A video encoding device may include a processor configured to select a sub-pixel (sub-pel) parameter from a set of sub-pel parameters. The set of sub-pel parameters may be defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block. The device may determine a prediction of a current block based on at least the sub-pel parameter. The device may encode the current block based on the prediction.

The sub-pel parameter may include a first parameter indicative of a fractional precision and a second parameter indicative of a direction. The sub-pel parameter may include a first parameter indicative of a horizontal fractional precision, a second parameter indicative of a vertical fractional precision, and a third parameter indicative of a direction.

The first sub-pel displacements may include displacements in only a first quadrant of the first ITMP search area of first sub-pel displacements. The second sub-pel displacements may include displacements in only a second quadrant of the second ITMP search area of second sub-pel displacements. The first quadrant and the second quadrant may be a same quadrant within the first ITMP search area and the second ITMP search area, respectively.

The first sub-pel displacements may include displacements at 1/4 pel from the first pixel position and displacements at 3/8 pel from the first pixel position. The second sub-pel displacements may include displacements at 1/4 pel from the second pixel position and displacements at 3/8 pel from the second pixel position.

The first sub-pel displacements may include displacements at 1/4 pel from the first pixel position and displacements at 1/8 pel from the first pixel position. The second sub-pel displacements may include displacements at 1/4 pel from the second pixel position and displacements at 1/8 pel from the second pixel position.

The current block may be a first current block. The sub-pel parameter may be a first sub-pel parameter. The device (e.g., the video decoding device) may receive an indication of whether sub-pel is used for a second current block. On a condition that the indication indicates that sub-pel is unused for the second current block, the device may refrain from determining a second sub-pel parameter for the second current block. On a condition that the indication indicates that sub-pel is used for the second current block. The device may select a second sub-pixel parameter from the set of sub-pel parameters; determine a prediction of the second current block based on the second sub-pel parameter; and decode the second current block based on the prediction.

The device may perform an intra template matching prediction (ITMP) search of a plurality of templates. The plurality of templates may include the template of the reconstructed block. The ITMP search may identify the reconstructed block. Determining the prediction of the current block may be further based on the reconstructed block.

The device (e.g., the video encoding device) may select the sub-pel parameter from the set of sub-pel parameters by determining respective sums of absolute difference (SADs) between a plurality of reconstructed block templates and a template of the current block. The plurality of templates may include the template of the reconstructed block. The device may sort the respective SADs in order from smallest SAD to largest SAD. The device may select the sub-pel parameter based on the sub-pel parameter being associated with one of two of the respective SADs with the smallest SAD. The device may include, in a bitstream, the encoded current block and an indication of the sub-pel parameter.

Intra Template Matching Prediction (ITMP) may include an intra prediction mode that predicts a (e.g., the current) block by copying the reconstructed block in the current frame whose L-shaped template optimally (e.g., best) matches the L-shaped template of the current block. The match between the L-shaped template of a reconstructed block and the L-shaped template of the current block may be measured via a predefined metric, e.g., Sum of Absolute Difference (SAD).

At the encoder side, within a search range covering a reconstructed part of the current frame, the encoder may search for the template closest to the template of the current block, in examples, using the predefined template matching metric. The block associated to the template retained by this search may become a prediction of the current block. The encoder may signal in the bitstream the usage of ITMP. At the decoder side, if ITMP is selected to predict the (e.g., same) current block, the (e.g., same) search and/or the (e.g., same) prediction process(es) may be used.

At the decoder side, if ITMP is selected to predict a luma Coding Block (CB), the positions within the current luma channel of the searched reconstructed blocks may be sorted in a list according to their template matching metric. An index previously read from the bitstream may indicate in this list the position within the current luma channel of the reconstructed block chosen for prediction. If the Local-Illumination Compensation (LIC) sub-mode of ITMP is selected to predict this luma CB, the Mean Removed SAD (MR-SAD) may be used as a template matching metric. The SAD may (e.g., otherwise) be used as a template matching metric.

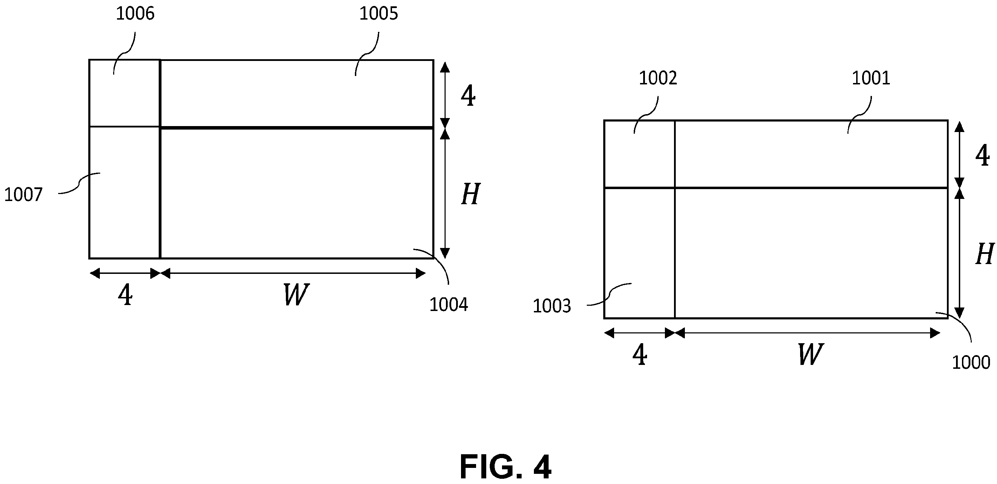

FIG. 4 shows a number of (e.g., three) types of matchings between the template of a ***W*** × ***H*** reconstructed block (1004) inside the search area covering a reconstructed part of a (e.g., the current) luma channel and/or the template of the current ***W*** × ***H*** luma CB (1000). For the current *W* × *H* luma CB, a number of (e.g., three) types of matchings may exist between the template of *a W* × *H* reconstructed block inside the search area covering a reconstructed part of the current luma channel and the template of the current *W* × *H* luma CB shown in FIG. 4. In FIG. 4, a (e.g., first) type of matching may involve the template matching metric between the above portion (1005) of the template of this *W* × *H* reconstructed block (1004) and the above portion (1001) of the template of the current *W* × *H* luma CB (1000). This metric may be denoted 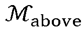 . A (e.g., second) type of matching may involve the template matching metric between the left portion (1007) of the template of (1004) and the left portion (1003) of the template of (1000). This metric may be denoted 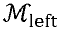 . The third type of matching involves the template matching metric between the template (1005), (1006), (1007) of (1004) and the template (1001), (1002), (1003) of (1000), this metric being denoted 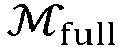 .

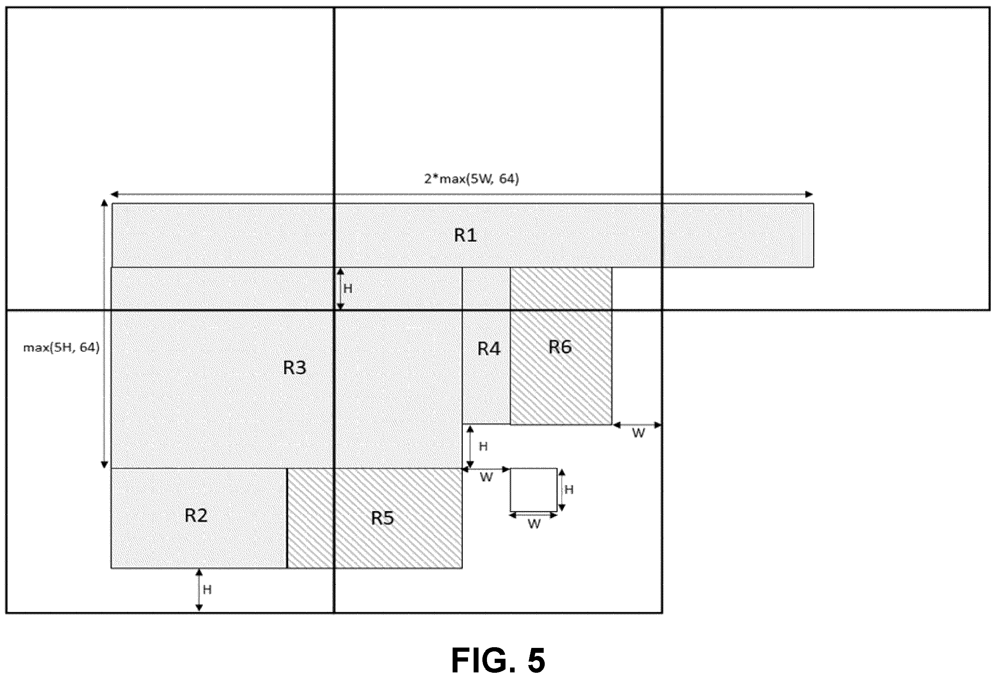

FIG. 5 shows a search area for a ***W*** × ***H*** luma CB predicted via ITMP. For the current *W* × *H* luma CB, the definition of the search area may depend on *W* and/or *H* as shown in FIG.5. This search area may be split into a number of (e.g., 6) sub-areas, denoted R1 to R6 in FIG. 5.

In some examples, for the current *W* × *H* luma CB, the ITMP search may be performed by calculating the template matching metric for each reconstructed block belonging to the search area, scanning by step $n ∈ ℕ *$ pixels horizontally/vertically.

In some examples, hierarchical search may be performed. The ITMP search may be decomposed into a sparse search and a subsequent refined search.

A sparse search may be performed. In a sparse search, a number of (e.g., the 6 regions) may be scanned in an order (e.g., the following order: R4, R5, R6, R1, R2, and R3). In each of these regions, scanning by step *ε* pixels horizontally/vertically, for each scanned reconstructed block, 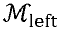 , and 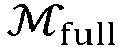 between the template of this scanned reconstructed block and the template of the current luma CB may be computed. In Random Access (RA) configuration, *ε* may equal a value (e.g., 3). In other configurations, for example, *ε* may equal a value (e.g., 4). The sparse search may sort in a list 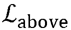 the positions within the current luma channel of the ζ scanned reconstructed blocks in an order (e.g., with smallest 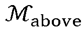 in ascending order). The "position" within the current luma channel of a reconstructed block may refer to the pair of the horizontal and/or vertical shifts of the pixel at the top-left of this reconstructed block with respect to the coordinates in the current luma channel of the pixel at the top-left of the current luma CB. It also sorts in a list 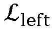 the positions within the current luma channel of the ζ scanned reconstructed blocks with smallest 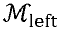 in ascending order. It also may sort in a list 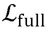 the positions within the current luma channel of the *ε* scanned reconstructed blocks with smallest 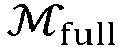 in ascending order. In RA configuration, if the LIC sub-mode of ITMP is selected to predict the current luma CB, ζ may equal a value (e.g., 3) and *ε* may equal a value (e.g., 15). Otherwise, ζ may equal a value (e.g., 6) and/or *ε* may equal a value (e.g., 30).

A merge search may be performed. Following the sparse search, for each available so-called "merge" reconstructed block, 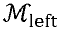 , and 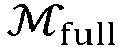 between the template of this "merge" reconstructed block and the template of the current luma CB may be computed. 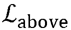 , 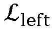 , and 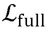 may be updated accordingly. A "merge" reconstructed block may refer to a reconstructed block whose position is pointed by the block vector of a previously decoded luma CB selecting either ITMP or Intra Block Copy (IBC) for prediction after translating this block vector from the position of this previously decoded luma CB to the position of the current luma CB.

A refined search may be performed. In a refined search, for each position stored in 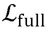 , scanning by step 1 pixel horizontally and/or vertically within a reduced range around this position, for each scanned reconstructed block, 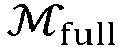 between the template of this scanned reconstructed block and the template of the current luma CB may be calculated. The refined search may sort in a list 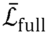 the positions within the current luma channel of the scanned reconstructed blocks in an order (e.g., with smallest 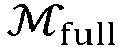 in ascending order). The size of 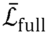 may be a value (e.g., 19). The same process may be repeated but replacing 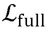 by 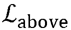 , 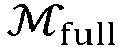 by 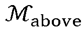 , and 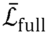 by 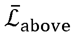 . The size of 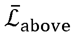 may be equal to a value (e.g., 3). The same process may be repeated but replacing 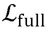 by 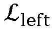 , 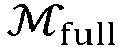 by 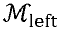 , and 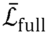 by 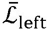 . The size of 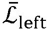 may be equal to a value (e.g., 3).

A list substitution may be performed. Following the refined search, the last number of (e.g., 6) positions (e.g., at most) in 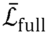 starting from an index (e.g., the index 13) in 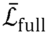 may be overwritten by the positions in { 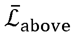 , 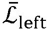 }. The term "at most" may indicate that, if a redundancy exists between a position in 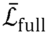 and a position in { 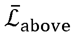 , 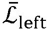 }, this position in { 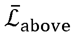 , 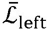 } may be ignored instead of overwritten. The 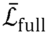 resulting from this overwriting step may correspond to a list (e.g., the final list) of a number of (e.g., 19) positions within the current luma channel of reconstructed blocks retained by the ITMP search.

At the decoder side, provided the read syntax of ITMP, it may be determined whether 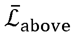 and 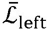 appear in the portion of 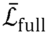 being used for prediction. If not, 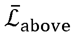 and 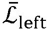 may not be created and/or the computations of 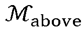 and 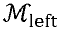 may be ignored.

For a luma CB, if the LIC sub-mode is selected to predict this luma CB, as the MR-SAD is used as template matching metric, 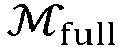 , 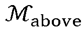 , and 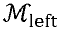 may be re-written MRSAD_{full}, MRSAD_{above}, and MRSAD_{left} respectively. If the LIC sub-mode is not selected to predict this luma CB, as the SAD is used as template matching metric, 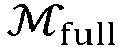 , 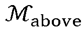 , and 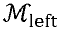 may be rewritten as SAD_{full}, SAD_{above}, and SAD_{left} respectively.

At the encoder side, for a luma CB, an entire ITMP search may be run with the SAD as template matching metric, yielding the final list 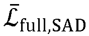 and/or an entire ITMP search may be run with the MR-SAD as template matching metric, yielding the final list 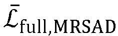 . At the encoder side, if the current luma CB is predicted via the LIC sub-mode, 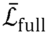 may equal 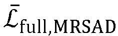 . may (e.g., otherwise) equal 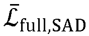 .

ITMP may feature a number of sub-modes. For example, a default sub-mode may include a single reconstructed block, whose position within the current luma channel may be picked from 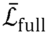 , may become a prediction of the current luma CB. An LIC sub-mode may include a single reconstructed block, whose position within the current luma channel may be picked from 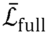 , may be scaled and/or offset, yielding a prediction of the current luma CB. A fusion sub-mode may include multiple reconstructed blocks, whose positions within the current luma channel may be picked from 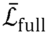 , may be combined, yielding a prediction of the current luma CB. A sub-pel sub-mode may include a fractional interpolation filter which may apply to a single reconstructed block, whose position within the current luma channel may be picked from 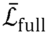 , yielding a prediction of the current luma CB. A linear filtering model sub-mode may include a learned linear filter which may apply to a single reconstructed block whose position within the current luma channel may be picked from 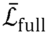 , yielding a prediction of the current luma CB.

The prediction using the LIC sub-mode for a luma CB may be written as $predBlock = clip \left(\left(\left(α refBlock\right)≫5\right)+β, 0, 1023\right)$ where refBlock may denote the reconstructed block with position 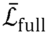 [**intra_tmp_idx**] within the current luma channel, $intra _ tmp _ idx ∈ \left〚0, 18\right〛$ may be read from the bitstream, and $α ∈ ℕ$ may denote the scale. $β ∈ ℤ$ may denote the offset. clip( . , 0, 1023) may denote the elementwise clipping between 0 and 1023, for example. LIC parameters α and *β* may be derived (e.g., learned from) the template of refBlock and the template of this luma CB.

The fusion sub-mode of ITMP may include the fusion via filtering and/or the fusion via blending.

The prediction of fusion via filtering for a luma CB may be $predBlock = clip \left(\left(\left({\sum }_{i = 0}^{m - 1} {w}_{i} \left({refBlock}_{i}-{refAL}_{i}\right)\right)+{w}_{m}b+\left(1≪15\right)\right)≫16,0,1023\right)$ For $i ∈ \left〚0,m-1\right〛 , m ∈ \left〚0, 5\right〛$, refBlockᵢ may denote the reconstructed block of index i with position 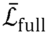 [5 (**intra_tmp_fusion_idx** - 3) + i] within the current luma channel, $intra _ tmp _ fusion _ idx ∈ \left〚0, 6\right〛$ being read from the bitstream. refAL*ᵢ* may denote the reconstructed **pixel** on the above-left side of the pixel at the top-left of refBlock*ᵢ*. For bit depth 10, b = 512.

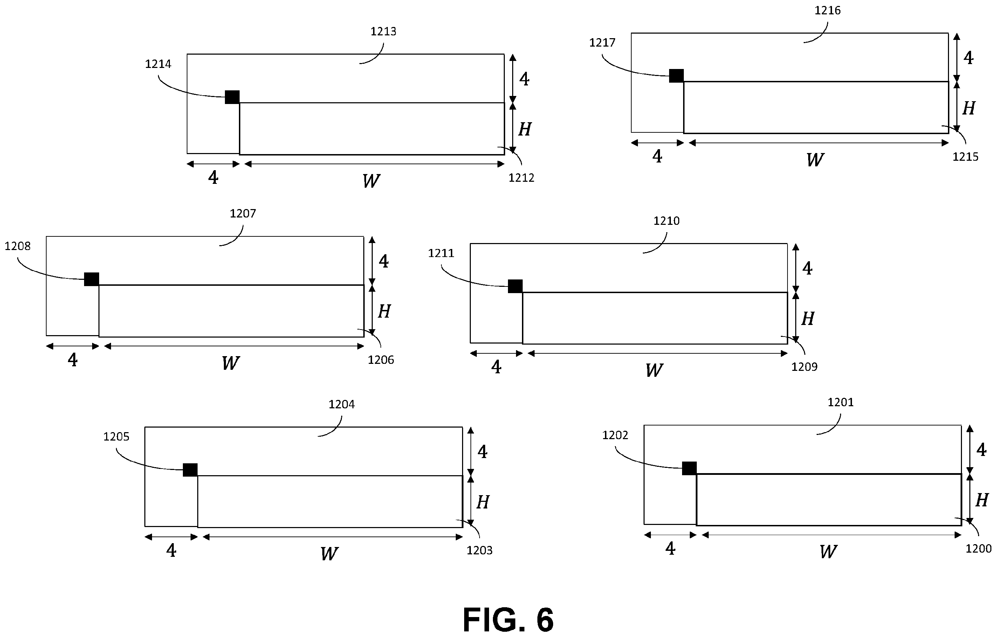

FIG. 6 shows extraction of the training examples. An example (e.g., each example) may correspond to a pair of a set of collocated samples inside the ***m*** templates of the ***m W*** × ***H*** reconstructed blocks and/or the collocated "target" sample inside the template of the current ***W* × *H*** luma CB, for learning the filter coefficients in the fusion via filtering sub-mode of ITMP.

The filter coefficients ${\left\{{w}_{i}\right\}}_{i ∈ \left〚0, m\right〛}$ may be derived (e.g., learned by) minimizing the Mean Squared Error (MSE) between the filtered version of the *m* templates of the *m* reconstructed blocks and the template of this luma CB. For the current *W* × *H* luma CB (1200), for each sample position in the template (1201) of (1200), the set of collocated samples {(1205), (1208), (1211), (1214), (1217)} belonging respectively to the template (1204) of the reconstructed block (1203), the template (1207) of the reconstructed block (1206), the template (1210) of the reconstructed block (1209), the template (1213) of the reconstructed block (1212), and the template (1216) of the reconstructed block (1215), may be collected with the collocated "target" sample (1202) belonging to the template (1201) of (1200), as a training example. The filter coefficients may be learned by reducing (e.g., minimizing) the MSE between the output of the filtering of {(1205), (1208), (1211), (1214), (1217)} and the associated "target" sample (1202), over all the collected training examples.

A combination of fusion via filtering and LIC may be provided. The combination of LIC and the fusion via filtering may be allowed. If LIC and the fusion via filtering are selected to predict the current luma CB, $predBlock = clip \left(\left(\left({\sum }_{i = 0}^{m - 1} {w}_{i} \left({\overline{refBlock}}_{i}-{\overline{refAL}}_{i}\right)\right)+{w}_{m}b+\left(1≪15\right)\right)≫16,0,1023\right)$ ${\overline{refBlock}}_{i} = clip \left(\left(\left({α}_{i} {refBlock}_{i}\right)≫5\right)+{β}_{i},0,1023\right)$ ${\overline{refAL}}_{i} = clip \left(\left(\left({α}_{i} {refAL}_{i}\right)≫5\right)+{β}_{i},0,1023\right)$ For $i ∈ \left〚0,m-1\right〛 , {α}_{i} ∈ ℕ$ and ${β}_{i} ∈ ℤ$ may denote respectively the scale and the offset associated to refBlockᵢ. During the learning of the filter coefficients ${\left\{{w}_{i}\right\}}_{i ∈ \left〚0, m\right〛}$, before collecting the training examples, LIC with scale α*ᵢ* and offset β*ᵢ* may apply to the template of refBlockᵢ.

A prediction of fusion via blending for a luma CB may be formulated as $predBlock = \left(\left({\sum }_{i = 0}^{m - 1} {γ}_{i} {refBlock}_{i}\right)+\left(1≪5\right)\right) ≫ 6$ For $i ∈ \left〚0,m-1\right〛 , m ∈ \left〚0, 5\right〛$, refBlock*ᵢ* may denote the reconstructed block of index i with position 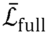 [5 **intra_tmp_fusion_idx** + i] within the current luma channel, **intra_tmp_fusion_idx** ∈ $\left〚0, 6\right〛$ being read from the bitstream.

For $i ∈ \left〚0,m-1\right〛$, 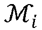 may denote the template matching metric value for refBlockᵢ. The blending coefficient *γᵢ* may be equal to an integer form of the normalization ratio 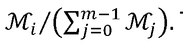 The conversion of this normalization ratio into integer may be identical to that used in Decoder Side Intra Mode Derivation (DIMD).

The combination of LIC and the fusion via blending may be allowed. If LIC and the fusion via blending are selected to predict the current luma CB, $predBlock = \left(\left({\sum }_{i = 0}^{m - 1} {γ}_{i} {\overline{refBlock}}_{i}\right)+\left(1≪5\right)\right) ≫ 6$ ${\overline{refBlock}}_{i} = clip \left(\left(\left({α}_{i} {refBlock}_{i}\right)≫5\right)+{β}_{i},0,1023\right)$ where, for $i ∈ \left〚0,m-1\right〛 , {α}_{i} ∈ ℕ$ and ${β}_{i} ∈ ℤ$ may denote respectively the scale and the offset associated to refBlockᵢ.

A prediction of Sub-pel for a luma CB may be expressed as $\left\{\begin{matrix}predBlock = clip \left(\left(\left(refBlockPad∗{f}_{p , d}\right)+\left(1≪7\right)\right)≫8,0,1023\right) , if d ∈ \left\{{LEFT}_{POS}, {RIGHT}_{POS}\right\} \\ predBlock = clip \left(\left(\left(refBlockPad∗{g}_{p , d}\right)+\left(1≪7\right)\right)≫8,0,1023\right) , if d ∈ \left\{{ABOVE}_{POS}, {BOTTOM}_{POS}\right\} \\ predBlock = clip \left(\left(\left(clip\left(\left(\left(refBlockPad∗{f}_{p , d}\right)+{o}_{0}\right)≫{s}_{0},0,1023\right)∗{g}_{p , d}\right)+{o}_{1}\right)≫{s}_{1},0,1023\right) otherwise .\end{matrix}\right.$ may denote a padded version of the reconstructed block refBlock with position 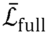 [**intra_tmp_idx**] within the current luma channel, $intra _ tmp _ idx ∈ \left〚0, 18\right〛$ being read from the bitstream. * may denote the valid convolution. *f_{p,d}* may denote the 1D 8-tap horizontal fractional interpolation filter for precision *p* ∈ $\left\{\frac{1}{2}pel,\frac{1}{4}pel\right\}$ and/or direction *d*. *g_{p,d}* may denote the 1D 8-tap vertical fractional interpolation filter for precision $p ∈ \left\{\frac{1}{2}pel,\frac{1}{4}pel\right\}$ and/or direction *d. d* ∈ {LEFT_POS, RIGHT_POS, ABOVE_POS, BOTTOM_POS, ABOVE_LEFT_POS, ABOVE_RIGHT_POS, LEFT_BOTTOM_POS, RIGHT_BOTTOM_POS}, may refer respectively to left, right, above, bottom, above-left, above-right, bottom-left, and bottom-right directions. Therefore, if sub-pel is used to predict a given luma CB, out of a number of (e.g., 16) possible filterings, one fractional interpolation filtering characterized by the pair (*p*,*d*) of parameters may be picked for prediction. Example filters involved in these 16 possible filterings are shown in Table 1 and Table 2. In examples, *s*₀ = 4. *o*₀ = -(1 << 13) << 4*.s*₁ = 12.*o*₁ = (1 << 11) + ((1 << 13) << 8).

refBlockPad may denote a padded version of the reconstructed block refBlock with position 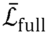 [**intra_tmp_idx**] within the current luma channel, $intra _ tmp _ idx ∈ \left〚0, 18\right〛$ being read from the bitstream. * may denote the valid convolution. *f_{p,d}* may denote the 1D 8-tap horizontal fractional interpolation filter for precision $p ∈ \left\{\frac{1}{2}pel,\frac{1}{4}pel\right\}$ and/or direction *d*. *g_{p,d}* may denote the 1D 8-tap vertical fractional interpolation filter for precision $p ∈ \left\{\frac{1}{2}pel,\frac{1}{4}pel\right\}$ and/or direction *d. d* ∈ {LEFT_POS, RIGHT_POS, ABOVE_POS, BOTTOM_POS, ABOVE_LEFT_POS, ABOVE_RIGHT_POS, LEFT_BOTTOM_POS, RIGHT_BOTTOM_POS}, may refer respectively to left, right, above, bottom, above-left, above-right, bottom-left, and bottom-right directions. Therefore, if sub-pel is used to predict a given luma CB, out of a number of (e.g., 16) possible filterings, one fractional interpolation filtering characterized by the pair (*p*,*d*) of parameters may be picked for prediction. Example filters involved in these 16 possible filterings are shown in Table 1 and Table 2. In examples, *s*₀ = 4.*o*₀ = -(1 << 13) << 4*.s*₁ = 12.*o*₁ = (1 << 11) + ((1 << 13) << 8).

**Table 1: example one-dimensional 8-tap horizontal fractional interpolation filter in the combination of ITMP and sub-pel.**

| *d* ∈ {LEFT_POS, ABOVE_LEFT_POS, LEFT_BOTTOM_POS} | *d* ∈ {RIGHT_POS, ABOVE_RIGHT_POS, RIGHT_BOTTOM_POS} |
|---|---|
| [-4, 16, -40, 232, 68, -20, 4, 0] | [0, 4, -20, 68, 232, -40, 16, -4] |
| [-4, 16, -44, 160, 160, -44, 16, -4] | [-4, 16, -44, 160, 160, -44, 16, -4] |

**Table 2: example one-dimensional 8-tap vertical fractional interpolation filter in the combination of ITMP and sub-pel.**

| | *d* ∈ {ABOVE_POS, ABOVE_LEFT_POS, ABOVE_RIGHT_POS} | *d* ∈ {BOTTOM_POS, LEFT_BOTTOM_POS, RIGHT_BOTTOM_POS} |
|---|---|---|
| ${g}_{\frac{1}{4} pel , d}$ | [[-4], [16], [-40], [232], [68], [-20], [4], [0]] | [[0], [4], [-20], [68], [232], [-40], [16], [-4]] |
| ${g}_{\frac{1}{2} pel , d}$ | [[-4], [16], [-44], [160], [160], [-44], [16], [-4]] | [[-4], [16], [-44], [160], [160], [-44], [16], [-4]] |

For this given luma CB, to learn the pair (*p*,*d*) of parameters, the 5 successive steps in Table 3 may apply. In examples, $S = \left\{\frac{1}{4}pel,\frac{1}{2}pel\right\} \times$
{LEFT_POS, RIGHT_POS, ABOVE_POS, BOTTOM_POS, ABOVE_LEFT_POS, ABOVE_RIGHT_POS, LEFT_BOTTOM_POS, RIGHT_BOTTOM_POS}. Here, × denotes the Cartesian product between two sets. Thus, card(*S*) = 16. For Table 3, *s*₀ = *s*₁ = 8.*o*₀ = *o*₁ = 1 << 7. In Table 3 at 1, the option without any fractional interpolation filtering may be indicated by *p* = -1.

**Table 2: example learning of the pair (p,d) of parameters for a given luma CB selecting ITMP and sub-pel for prediction.**

| |
|---|
| 1. For the option without any fractional interpolation filtering, the template matching metric M_{full} = SAD_{full} between the template of refBlock and the template of this given luma CB may be computed. |
| 2. *∀*(*p, d*) ∈ *S*, i.e. for each of the card(*S*) possible filterings, the 4-tap version of this filtering **applies** to a padded version of the template of refBlock, and the template matching metric M_{full} = SAD_{full} between the result of this filtering and the template of this given luma CB may be computed. card(*S*) may represent the number of possible pairs of sub-pel parameter values in *S*. |
| 3. The pairs of parameters of the card(*S*) + 1 possible options tested in 1. and 2. may be sorted in ascending order of M_{full}. |
| 4. The sub-list *I* may gather the first two pairs of parameters from the previously sorted list. |
| 5. The pair (*p,d*) *= I*[intra_tmp_frac_idx] may be chosen to predict this given luma CB, intra_tmp_frac_idx ∈ {0, 1} being either inferred or read from the bitstream. |

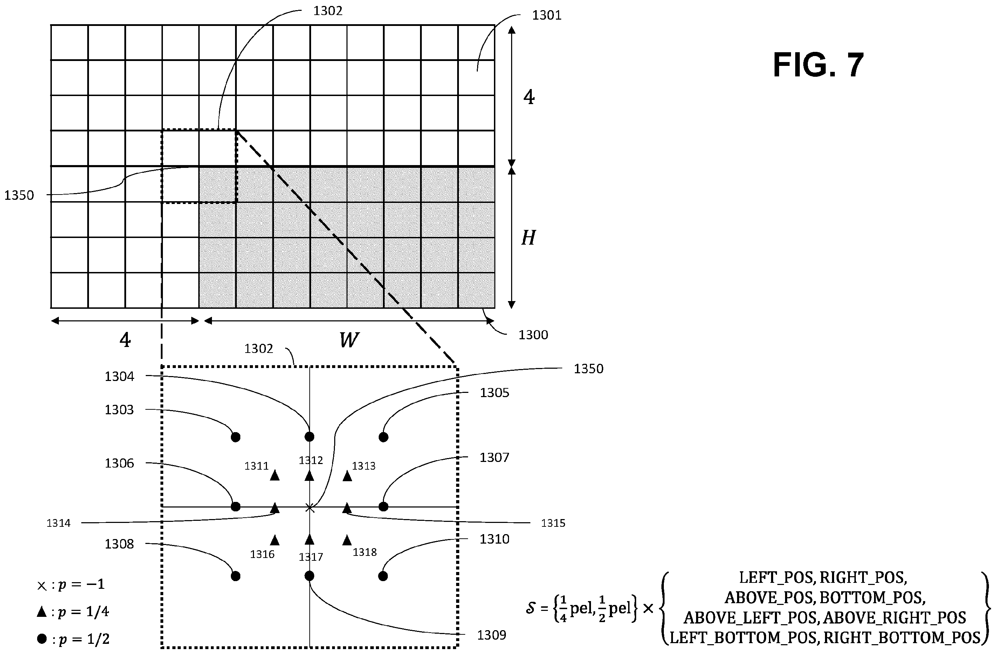

FIG. 7 illustrates an example of *S* represented as sub-pel displacements of the position of the pixel at the top-left of the reconstructed block refBlock inside the current luma channel for a given *W* × *H* luma CB predicted via the combination of ITMP and sub-pel.

For a given *W* × *H* luma CB, a (e.g., each) possible fractional interpolation filtering may represent a sub-pel displacement of the position of the pixel at the top-left of the *W* × *H* reconstructed block refBlock inside the current luma channel (e.g., as shown in FIG. 7). In FIG. 7, (1350) marks the position of the pixel at the top-left of refBlock (1300), (1301) labels the template of (1300), and (1302) delineates the 1-pel neighborhood around (1350). A black dot marks the displaced position of the pixel at the top-left of refBlock when $p = \frac{1}{2}$ in a direction. A black triangle marks the displaced position of the pixel at the top-left of refBlock when $p = \frac{1}{4}$ in a direction. The following mapping may apply. $\left\{1303, 1311\right\} : d = ABOVE_LEFT_POS$ $\left\{1304, 1312\right\} : d = ABOVE_POS$ $\left\{1305, 1313\right\} : d = ABOVE_RIGHT_POS$ $\left\{1306, 1314\right\} : d = LEFT_POS$ $\left\{1307, 1315\right\} : d = RIGHT _ POS$ $\left\{1308, 1316\right\} : d = LEFT _ BOTTOM _ POS$ $\left\{1309, 1317\right\} : d = BOTTOM _ POS$ $\left\{1310, 1318\right\} : d = RIGHT _ BOTTOM _ POS .$

The combination of LIC and sub-pel may be allowed. If LIC and sub-pel are selected to predict the current luma CB, the prediction of a (e.g., the current) luma CB may be denoted as p̅r̅e̅d̅B̅l̅o̅c̅k̅. $\overline{predBlock} = clip \left(\left(\left(α predBlock\right)≫5\right)+β,0,1023\right)$ where predBlock may arise from Equation (*). $α ∈ ℕ$ may denote the scale. $β ∈ ℤ$ may denote the offset. During the learning of the pair (*p,d*) of parameters, Table 3 may apply and 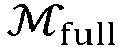 = MRSAD_{full}.

A prediction of a linear filtering model for a luma CB may be:

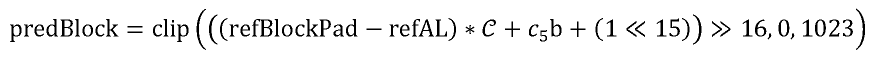

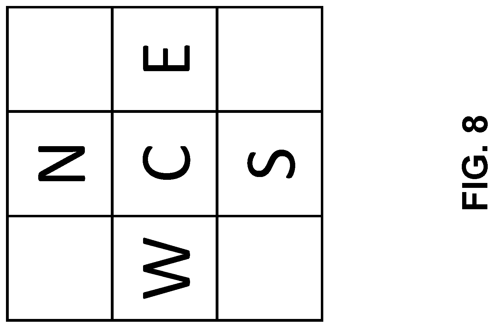

FIG. 8 shows support of a two-dimensional filter 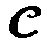 for a reconstructed pixel C inside a padded version of the reconstructed block **refBlockPad,** in the linear filtering model sub-mode of ITMP. refBlockPad may denote a padded version of the reconstructed block refBlock with position 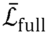 [**intra_tmp_idx**] within the current luma channel, $intra _ tmp _ idx ∈ 〚 0 , 18 〛$ being read from the bitstream. refAL may denote the reconstructed pixel on the above-left side of the pixel at the top-left of refBlock. * may denote the valid convolution. C may denote the 2D filter comprising coefficients ${\left\{{c}_{i}\right\}}_{i ∈ 〚 0 , 4 〛}$*.* For bit depth 10, b = 512. For a reconstructed pixel C belonging to refBlockPad, the support of *C* may be depicted in FIG. 8.

At the position of C,

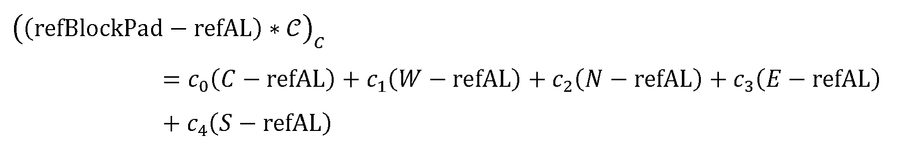

The coefficients ${\left\{{c}_{i}\right\}}_{i ∈ \left〚0, 5\right〛}$, may be learned by reducing (e.g., minimizing) the MSE between the filtered version of the padded template of refBlock and the template of this luma CB.

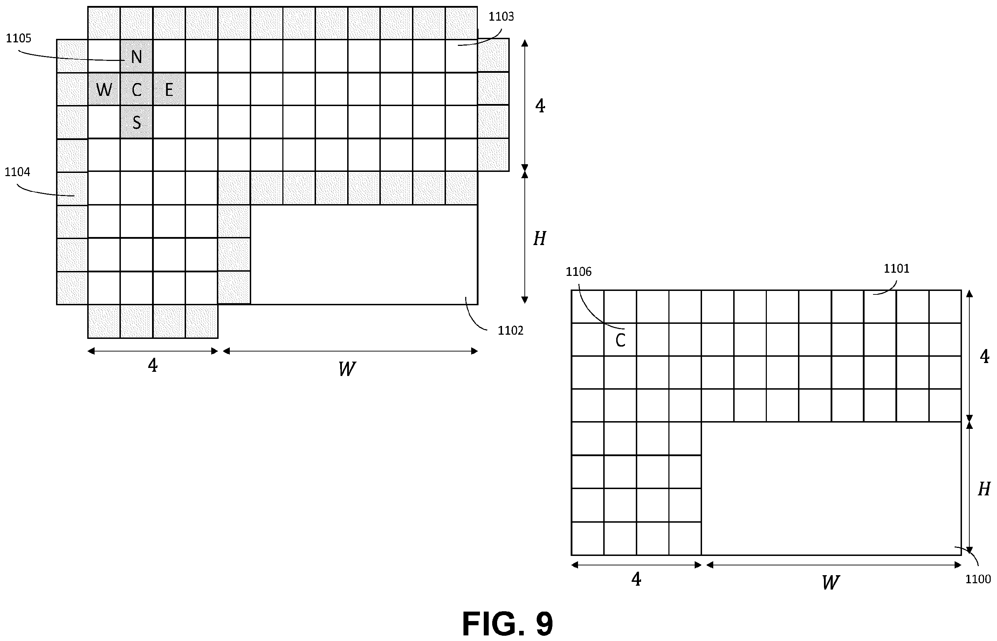

FIG. 9 shows an extraction of training examples. An (e.g., each) example may correspond to the pair of the set of samples {N, C, S, E, W} inside the template of the ***W*** × ***H*** reconstructed block and the collocated "target" sample inside the template of the current **W** × ***H*** luma CB, for learning the filter coefficients in the linear filtering model sub-mode of ITMP. As shown in FIG. 9, for the current *W* × *H* luma CB (1100), for each position C in the template (1103) of the *W* × *H* reconstructed block (1102), the pair of the set of samples {N, C, S, E, W} (1105) inside (1103) and the collocated "target" sample (1106) inside the template (1101) of (1100) may be collected as a training example. The filter coefficients may be learned by reducing (e.g., minimizing) the MSE between the output of the filtering of {N, C, S, E, W} and the associated "target" sample, over all the collected training examples. As the pattern (1105) may go out of the bounds of (1103), (1103) may be supplemented with the samples (1104). A sample in (1104) may be either reconstructed or padded from neighboring samples, depending on its availability.

ITMP signaling may be provided. If the current Coding Unit (CU) is predicted in intra, its height may be smaller than 64 and its width may be smaller than 64. Neither the neural network-based intra prediction mode nor DIMD may be selected to predict the current luma CB. ITMP may be signaled via a flag shown in Table 4. If the ITMP flag is true (e.g., ITMP is selected to predict the current luma CB), the rest of the intra prediction modes may be inferred as unused.

**Table 4: example signaling of ITMP for the current luma CB if the current CU is predicted in intra, its height may be smaller than 64 and its width may be smaller than 64, and neither neural network-based intra prediction mode nor DIMD may be selected to predict the current luma CB.**

| |
|---|
| ... |
| **intra_tmp_flag** |
| if (intra_tmp_flag) { |
| **intra_tmp_fusion_flag** |
| if (intra_tmp_fusion_flag) { |
| **intra_tmp_fusion_idx** |
| **intra_tmp_lic_flag** |
| } else { |
| **intra_tmp_idx** |
| **intra_tmp_filter_flag** |
| if (!intra_tmp_filter_flag) { |
| **intra_tmp_lic_flag** |
| if (intra_tmp_lic_flag && isltmpLicExtension) { |
| **intra_tmp_lic_index** |
| } |
| **intra_tmp_frac_idx** |
| } |
| } |
| } |
| ... |

**intra_tmp_flag:** ITMP flag. If it is true, ITMP may be selected to predict the current luma CB. If it is false, ITMP may not be selected to predict the current luma CB.

**intra_tmp_fusion_flag:** ITMP fusion flag. If it is true, the fusion sub-mode may be selected to predict the current luma CB. If it is false, the fusion sub-mode may not be selected to predict the current luma CB.

**intra_tmp_fusion_idx:** ITMP fusion index, belonging to [|0, 5|]. **intra_tmp_fusion_idx** in [|0, 2|] may mean that the fusion via blending is used. **intra_tmp_fusion_idx** in [|3, 5|] may mean that the fusion via filtering is used. For the current luma CB, in 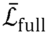 , the indices of the positions within the current luma channel of the reconstructed blocks involved in the fusion are (e.g., always) consecutive(s). This means that only the index in 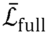 of the position within the current luma channel of the first reconstructed block involved in the fusion may (e.g., must) be signaled via **intra_tmp_fusion_idx.** If **intra_tmp_fusion_idx** in [|0, 2|], 5***intra_tmp_fusion_idx** may be the index in 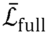 of the position within the current luma channel of the first reconstructed block involved in the fusion via blending. If **intra_tmp_fusion_idx** in [|3, 5|], 5***(intra_tmp_fusion_idx** - 3) may be the index in 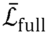 of the position within the current luma channel of the first reconstructed block involved in the fusion via filtering.

**intra_tmp_idx**: index in 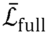 of the position within the current luma channel of the single reconstructed block used for prediction. **intra_tmp_idx** may belong to [|0, 18|].

**intra_tmp_filter_flag**: ITMP linear-filtering-model flag. If it is true, the linear filtering model sub-mode may be selected to predict the current luma CB. If it is false, the linear filtering model sub-mode may not be selected to predict the current luma CB.

**intra_tmp_lic_flag**: ITMP LIC flag. If it is true, LIC may be selected to predict the current luma CB. If it is false, LIC may not be selected to predict the current luma CB.

**isltmpLicExtension:** boolean indicating whether the LIC multiple linear models are activated.

**intra_tmp_lic_index**: ITMP LIC index, belonging to [|0, 3|]. It may indicate which of the 4 LIC models is used.

**intra_tmp_frac_idx**: ITMP fractional interpolation index, belonging to {0, 1}. (*p*,*d*) = *I*[**intra_tmp_frac_idx**]**.** If the size of the current luma CB is larger than 128, **intra_tmp_frac_idx** may be 0. Otherwise, **intra_tmp_frac_idx** may be read from video data (e.g., the bitstream).

In Intra Block Copy (IBC), at the encoder side, for a block, block matching search may find the optimal block vector (or motion vector). A block vector may indicate the displacement from the current block to a reference block, which may be (e.g., already) reconstructed inside the current frame. If this block selects IBC for prediction, the optimal block vector may be written to the bitstream. At the decoder side, for this block selecting IBC for prediction, as the optimal block vector is read from the bitstream, block matching search may not be needed.

At the encoder side, for a given *W* × *H* luma CB, in the combination of ITMP and sub-pel, for a given value of **intra_tmp_idx** (e.g., a given *W* × *H* reconstructed block refBlock with position 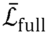 [**intra_tmp_idx**] within the current luma channel), during the learning of the pair (*p*,*d*) of parameters, compression efficiency may be lost and/or computations may be wasted because of redundancies among sub-pel displacements.

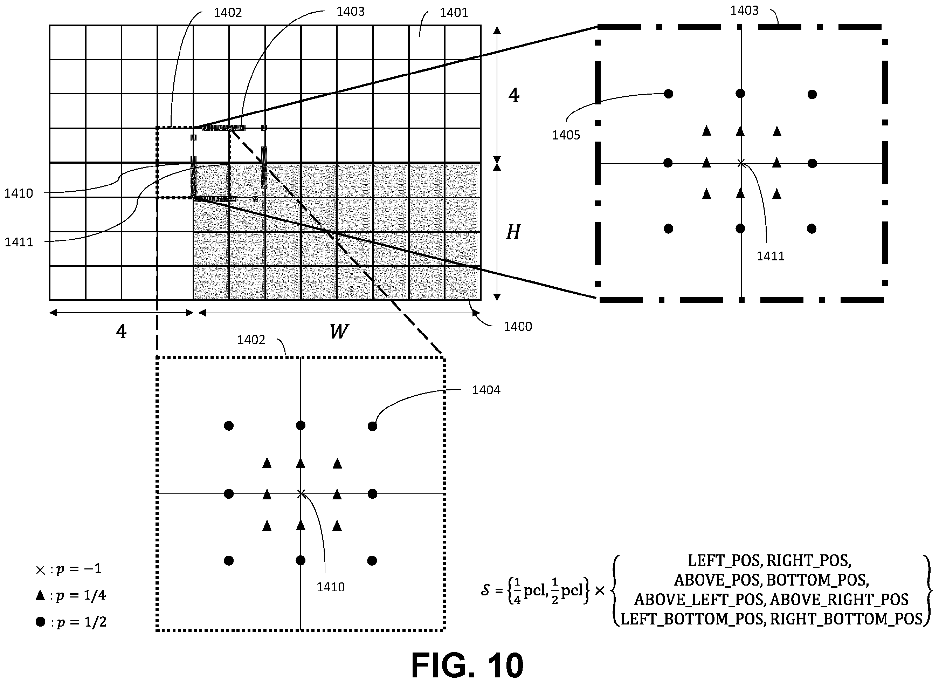

FIG. 10 illustrates an example overlap between two sub-pel displacements during the learning of the pair (*p*,*d*) of parameters for a given luma CB at the encoder. An overlap (e.g.,, each overlap) may be associated with a different reconstructed block.

As illustrated in FIG. 10, (1400) may denote the reconstructed block refBlock. (1401) may refer to the template of (1400). (1402) may delineate the 1-pel neighborhood around the position (1410) of the pixel at the top-left of (1400). (1403) may frame the 1-pel neighborhood around the position (1411) of the pixel at the top-left of reconstructed block that is shifted by one pixel to the right with respect to refBlock. If the two reconstructed blocks are considered by the encoder (e.g., in the case where the positions within the current luma channel of these two reconstructed block belong to 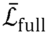 ), the sub-pel displacement (1404) and the sub-pel displacement (1405) may overlap. This overlap may mean that the prediction of the luma CB associated with (1404) and the prediction of the luma CB associated with (1405) are identical.

The above-mentioned redundancies may be removed by modifying the sub-pel displacements in the combination of ITMP and sub-pel.

For a hybrid block-based video codec supporting the combination of ITMP and sub-pel, the domain of sub-pel parameters may be defined such that the areas of sub-pel displacements may be disjoint. This may mean that two sub-pel displacements will not (e.g., may never) overlap. To limit the computational burden of the learning of the sub-pel parameters in the case of disjoint areas of sub-pel displacements (e.g., each containing a significant number of sub-pel displacements), the learning of the sub-pel parameters may be skipped if sub-pel is signaled as unused.

The domain of sub-pel parameters may be defined to make the areas of sub-pel displacements disjoint.

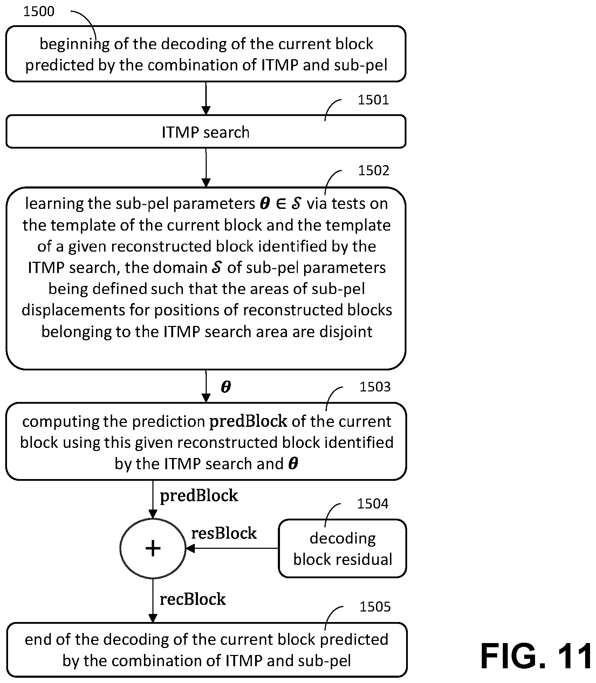

In the hybrid block-based video codec of interest supporting the combination of ITMP and sub-pel, for the current block predicted by the combination of ITMP and sub-pel, the domain 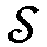 of sub-pel parameters may be defined such that the areas of sub-pel displacements for positions of reconstructed blocks belonging to the ITMP search area may be disjoint. For example, FIG. 11 depicts decoding of the current block predicted by the combination of ITMP and sub-pel according to a variant embodiment in the hybrid block-based video codec of interest.

At (1500), the decoding of the current block predicted by the combination of ITMP and sub-pel may begin. At (1501), the ITMP search using a search range covering a reconstructed part of the current frame may be run. At (1502), the sub-pel parameters *θ* ∈ 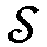 may be learned via tests on the template of the current block and the template of a given reconstructed block identified by the ITMP search. The domain 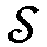 of sub-pel parameters may be defined such that the areas of sub-pel displacements for positions of reconstructed blocks belonging to the ITMP search area may be disjoint.

At (1503), the prediction predBlock of the current block may be computed using this given reconstructed block identified by the ITMP search and *θ*. At (1504), the residual resBlock of the current block may be decoded. The reconstruction recBlock of the current block may be recBlock = predBlock + resBlock. Following this, in-loop filtering may apply. At (1505), the decoding of the current block predicted by the combination of ITMP and sub-pel may end.

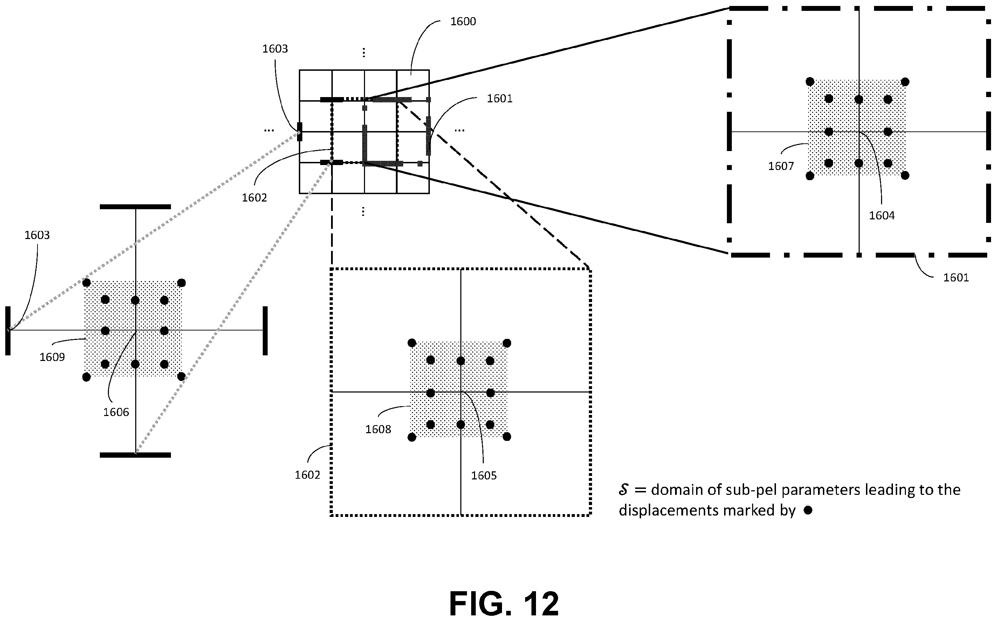

FIG. 12 shows an example definition of the domain 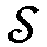 of sub-pel parameters according to an embodiment in the hybrid block-based video codec of interest.

For example, FIG. 12 presents an example of domain 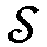 of sub-pel parameters for which the areas of sub-pel displacements for positions of reconstructed blocks belonging to the ITMP search area may be disjoint. (1600) may label a piece of the ITMP search range specified for the current block. (1602) may delineate the 1-pel neighborhood around the position (1605) of the pixel at the top-left of a given reconstructed block 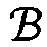 . (1601) may delineate the 1-pel neighborhood around the position (1604) of the pixel at the top-left of the reconstructed block shifted by one pixel to the right with respect to 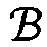 . (1603) may delineate the 1-pel neighborhood around the position (1606) of the pixel at the top-left of the reconstructed block shifted by one pixel to the left with respect to 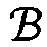 .

In (e.g., each of) (1601), (1602), and (1603), a black dot may mark a sub-pel displacement of the position of the pixel at the top-left of the associated reconstructed block. The dotted pattern squares (1607), (1608), and (1609) may represent the areas of sub-pel displacements in (1601), (1602), and (1603), respectively. 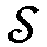 may correspond to the domain of sub-pel parameters leading to the displacements marked by the black dots. In FIG. 12, the dotted pattern squares may not overlap. In FIG. 12, a (e.g., any) set of parameter values may be used to express the represented sub-pel displacements. In a dotted pattern square, one or more (e.g., each) of the four black dots at the corners may have displacement 3/8 pel horizontally/vertically from the center. In a dotted pattern square, one or more (e.g., each) of the other eight black dots may have displacement 1/4 pel horizontally/vertically from the center. Note that, for readability, the 1-pel neighborhood around the position of the pixel at the top-left of the reconstructed block shifted by one pixel to the *direction* with respect to 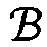 and its area of sub-pel displacements are not shown in FIG. 12 (e.g., where *direction* ∈ {above, bottom, above-left, above-right, bottom-left, bottom-right}). Considering the nine 1-pel neighborhoods and their areas of sub-pel displacements, none of the areas of sub-pel displacements may overlap.

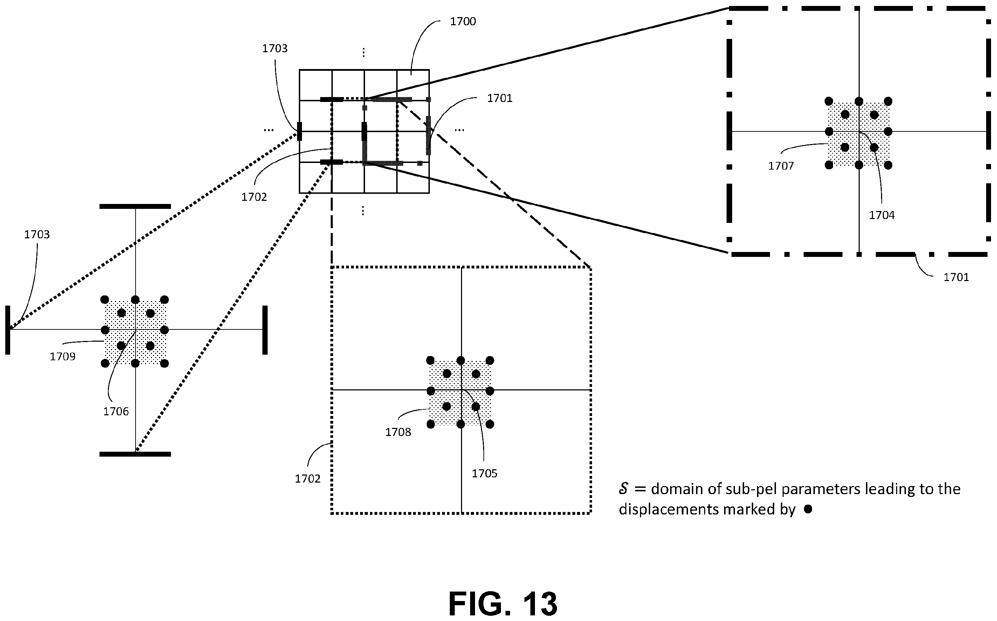

For example, FIG. 13 illustrates another example of domain 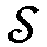 of sub-pel parameters for which the areas of sub-pel displacements for positions of reconstructed blocks belonging to the ITMP search area may be disjoint. The descriptions of (1700) to (1709) may copy the descriptions of (1600) to (1609) respectively. In FIG. 13, the dotted pattern squares may not overlap. In FIG. 13, any set of parameter values may be used to express the represented sub-pel displacements, knowing that, in a dotted pattern square, each of the eight black dots at the borders may have displacement 1/4 pel horizontally/vertically from the center and each of the other four black dots may have displacement 1/8 pel horizontally/vertically from the center.

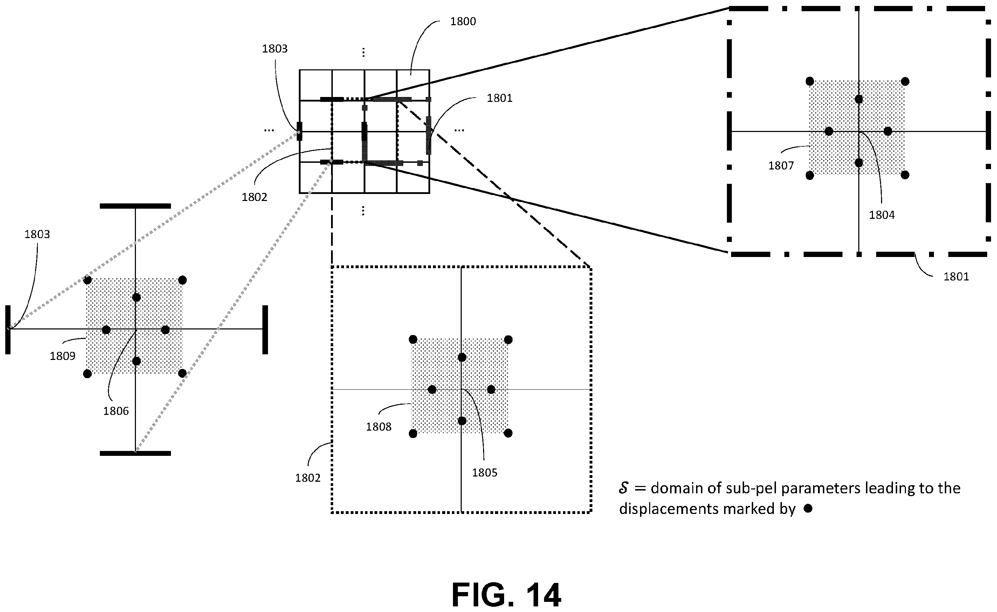

FIG. 14 depicts another example of domain 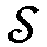 of sub-pel parameters for which the areas of sub-pel displacements for positions of reconstructed blocks belonging to the ITMP search area may be disjoint. The descriptions of (1800) to (1809) may copy the descriptions of (1600) to (1609), respectively. In FIG. 14, the dotted pattern squares may not overlap. In FIG. 14, a (e.g., any) set of parameter values may be used to express the represented sub-pel displacements. In a dotted pattern square, one or more (e.g., each) of the four black dots at the borders may have displacement 3/8 pel horizontally/vertically from the center. In a dotted pattern square, one or more (e.g., each) of the other four black dots may have displacement 1/4 pel horizontally/vertically from the center.

Based on FIGs. 12, 13, and 14, it may be straightforward to derive any alternative domain 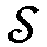 of sub-pel parameters for which the areas of sub-pel displacements for positions of reconstructed blocks belonging to the ITMP search area may be disjoint.

Fractional interpolation filtering may be parameterized via a pair of parameters.

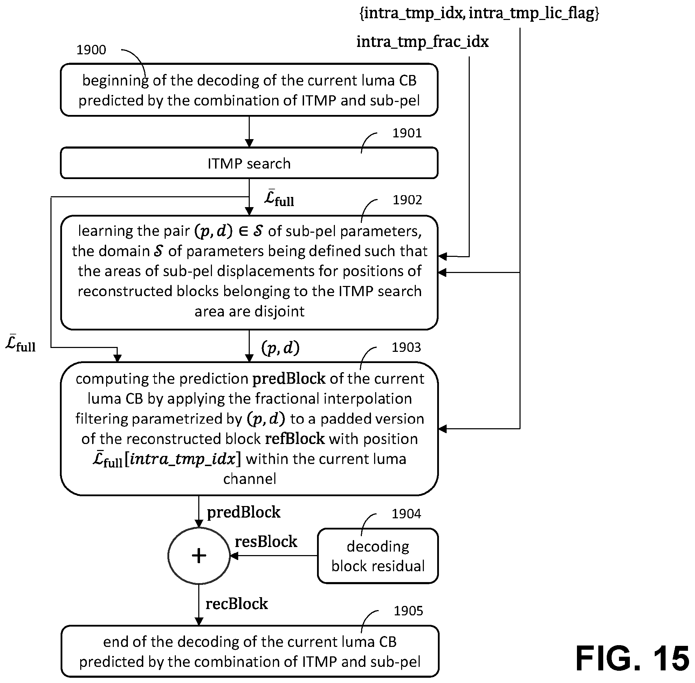

The domain 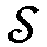 of sub-pel parameters may be defined such that the areas of sub-pel displacements for positions of reconstructed blocks belonging to the ITMP search area may be disjoint. For example, this may imply (e.g., in the combination of ITMP and sub-pel) that the fractional interpolation filtering may be parameterized via a pair (*p*,*d*) of parameters. For example, FIG. 15 shows an example of features described herein during the decoding of the current luma CB predicted via the combination of ITMP and sub-pel. In FIG. 15, for the current luma CB, **intra_tmp_flag** may be true, **intra_tmp_fusion_flag** may be false, and **intra_tmp_filter_flag** may be false.

At (1900), the decoding of the current luma CB predicted via the combination of ITMP and sub-pel may begin. At (1901), the ITMP search may be run, returning 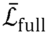 . For instance, for the current luma CB, the ITMP search range depicted in FIG. 5 may be used.

At (1902), the pair (*p, d*) ∈ 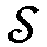 of sub-pel parameters may be learned. The domain 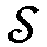 of sub-pel parameters may be defined such that the areas of sub-pel displacements for positions of reconstructed blocks belonging to the ITMP search area may be disjoint. For example, if **intra_tmp_lic_flag** is false, the learning process may reproduce Table 3 using **intra_tmp_idx** and **intra_tmp_frac_idx.** If **intra_tmp_lic_flag** is true, the learning process may reproduce Table 3 but 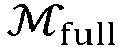 = MRSAD_{full}, and using **intra_tmp_idx** and **intra_tmp_frac_idx.**

At (1903), the prediction predBlock of the current luma CB may be computed by applying the fractional interpolation filtering parametrized by (*p*, *d)* to a padded version of the reconstructed block refBlock with position 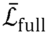 [**intra_tmp_idx**] within the current luma channel. For instance, if **intra_tmp_lic_flag** is false, the generation of predBlock may follow Equation (*). For instance, if **intra_tmp_lic_flag** is true, the prediction of the current luma CB may be equal to clip ((α predBlock) >> 5) + *β*, 0, 1023), α and *β* being the learned LIC scale and offset respectively, predBlock coming from Equation (*). For instance, the definition of the fractional interpolation filters may be picked from Table 1 or Table 2.

At (1904), the residual resBlock of the current luma CB may be decoded. Then, the reconstruction recBlock of the current luma CB may be recBlock = predBlock + resBlock. Following this, in-loop filtering may apply. At (1905), the decoding of the current luma CB predicted by the combination of ITMP and sub-pel may end.

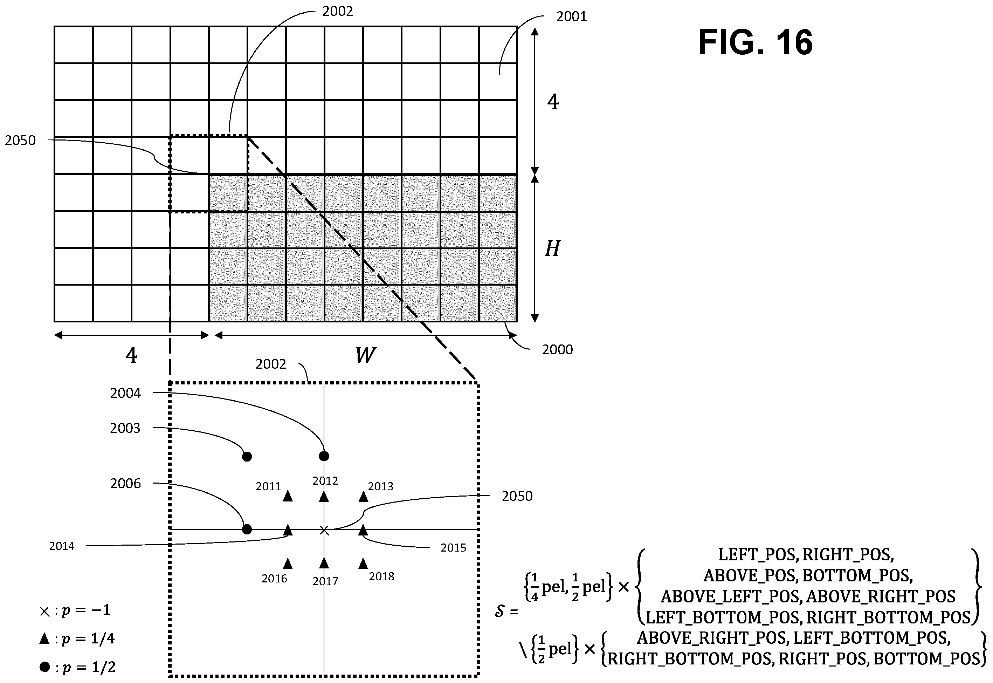

FIG. 16 illustrates an example of domain 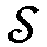 of sub-pel parameters for which the areas of sub-pel displacements for positions of reconstructed blocks belonging to the ITMP search area may be disjoint. For the current *W* × *H* luma CB, (2050) may mark the position of the pixel at the top-left of the *W* × *H* refBlock (2000). (2001) may label the template of (2000). (2002) may delineate the 1-pel neighborhood around (2050). A black dot may mark the displaced position of the pixel at the top-left of refBlock when $p = \frac{1}{2}$ in a direction. A black triangle may mark the displaced position of the pixel at the top-left of refBlock when $p = \frac{1}{4}$ in a direction. The following mapping may apply. $\left\{2003, 2011\right\} : d = ABOVE_LEFT_POS$ $\left\{2004, 2012\right\} : d = ABOVE_POS$ $2013 : d = ABOVE_RIGHT_POS$ $\left\{2006, 2014\right\} : d = LEFT_POS$ $2015 : d = RIGHT_POS$ $2016 : d = LEFT_BOTTOM_POS$ $2017 : d = BOTTOM _ POS$ $2018 : d = RIGHT _ BOTTOM _ POS .$

In FIG. 16, the symbol \ in the definition of *S* may denote "excluding".

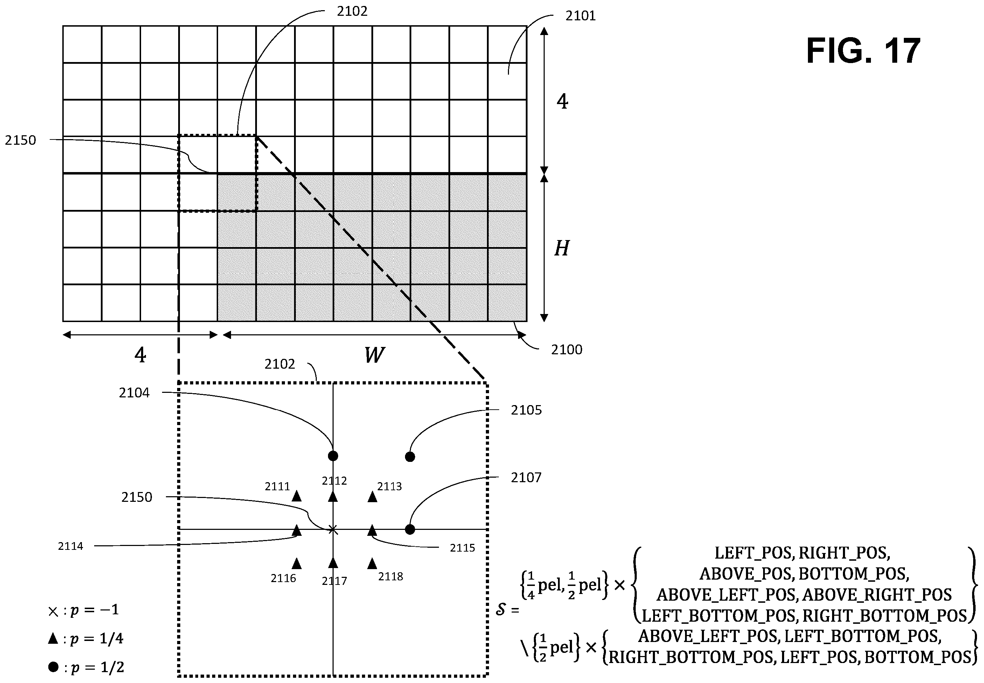

FIG. 17 illustrates another example of domain 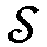 of sub-pel parameters for which the areas of sub-pel displacements for positions of reconstructed blocks belonging to the ITMP search area may be disjoint. For the current W × *H* luma CB, (2150) may mark the position of the pixel at the top-left of the *W* × *H* refBlock (2100). (2101) may label the template of (2100). (2102) may delineate the 1-pel neighborhood around (2150). A black dot may mark the displaced position of the pixel at the top-left of refBlock when $p = \frac{1}{2}$ in a direction. A black triangle may mark the displaced position of the pixel at the top-left of refBlock when $p = \frac{1}{4}$ in a direction. The following mapping may apply. $2111 : d = ABOVE _ LEFT _ POS$ $\left\{2104, 2112\right\} : d = ABOVE _ POS$ $\left\{2105, 2113\right\} : d = ABOVE _ RIGHT _ POS$ $2114 : d = LEFT _ POS$ $\left\{2107, 2115\right\} : d = RIGHT _ POS$ $2116 : d = LEFT _ BOTTOM _ POS$ $2117 : d = BOTTOM_POS$ $2118 : d = RIGHT_BOTTOM_POS .$

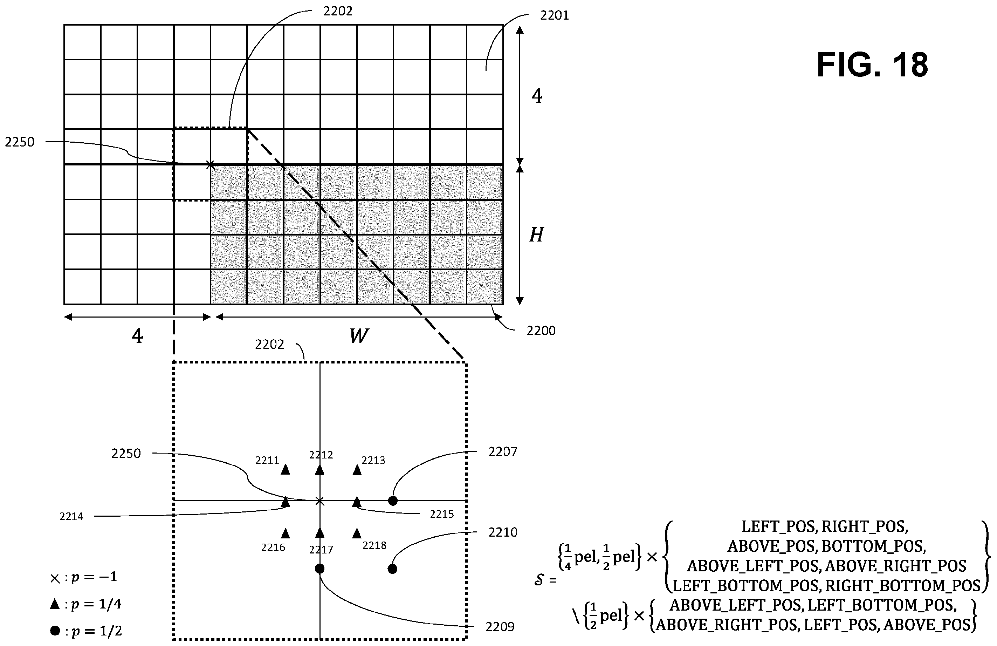

FIG. 18 shows another example of domain 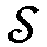 of sub-pel parameters for which the areas of sub-pel displacements for positions of reconstructed blocks belonging to the ITMP search area may be disjoint. For the current *W* × *H* luma CB, (2250) may mark the position of the pixel at the top-left of the *W* × *H* refBlock (2200). (2201) may label the template of (2200). (2202) may delineate the 1-pel neighborhood around (2250). A black dot may mark the displaced position of the pixel at the top-left of refBlock when $p = \frac{1}{2}$ in a direction. A black triangle may mark the displaced position of the pixel at the top-left of refBlock when $p = \frac{1}{4}$ in a direction. The following mapping may apply. $2211 : d = ABOVE_LEFT_POS$ $2212 : d = ABOVE_POS$ $2213 : d = ABOVE_RIGHT_POS$ $2214 : d = LEFT_POS$ $\left\{2207, 2215\right\} : d = RIGHT_POS$ $2216 : d = LEFT_BOTTOM_POS$ $\left\{2209, 2217\right\} : d = BOTTOM_POS$ $\left\{2210, 2118\right\} : d = RIGHT_BOTTOM_POS .$

From the examples in FIGs. 16, 17, and 18, it may be straightforward to derive any alternative example of domain S of sub-pel parameters for which the areas of sub-pel displacements for positions of reconstructed blocks belonging to the ITMP search area may be disjoint.

Fractional interpolation filtering may be parameterized via a triplet of parameters.

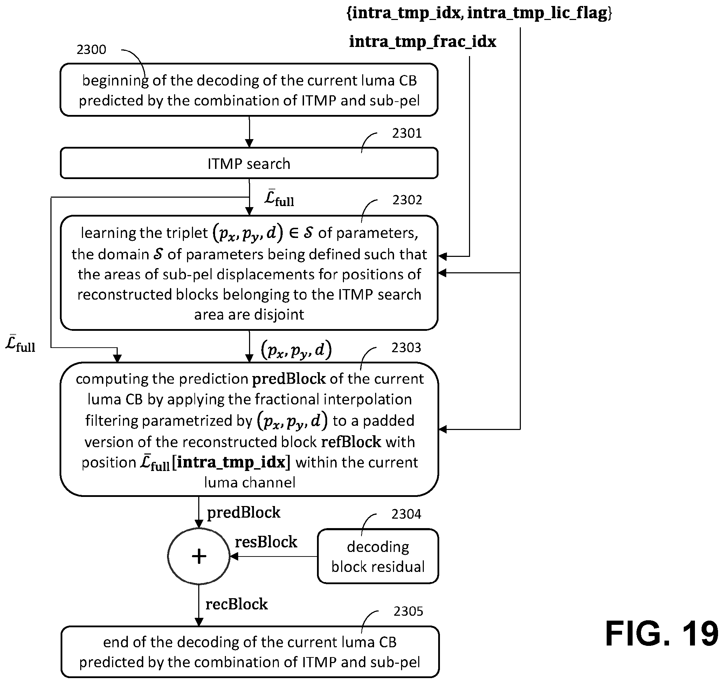

The domain 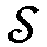 of sub-pel parameters may be defined such that the areas of sub-pel displacements for positions of reconstructed blocks belonging to the ITMP search area may be disjoint. The fractional interpolation filtering being parameterized via a triplet (*pₓ, p_{y}, d*) of parameters. *pₓ* may refer to the horizontal fractional precision. *p_{y}* may refer to the vertical fractional precision. FIG. 19 illustrates an example of features described herein during the decoding of the current luma CB predicted via the combination of ITMP and sub-pel. In FIG. 19, for the current luma CB, **intra_tmp_flag** may be true, **intra_tmp_fusion_flag** may be false, and **intra_tmp_filter_flag** may be false.

At (2300), the decoding of the current luma CB predicted via the combination of ITMP and sub-pel may begin. At (2301), the ITMP search may be run, returning 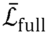 . For example, for the current luma CB, the ITMP search range depicted in FIG. 5 may be used.

At (2302), the triplet (*pₓ, p_{y}, d*) ∈ 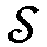 of sub-pel parameters may be learned. The domain *S* of sub-pel parameters may be defined such that the areas of sub-pel displacements for positions of reconstructed blocks belonging to the ITMP search area may be disjoint. For example, if **intra_tmp_lic_flag** is false, the learning process may reproduce Table 5 using **intra_tmp_idx** and **intra_tmp_frac_idx.** If **intra_tmp_lic_flag** is true, the learning process may reproduce Table 5 but with 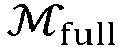 = MRSAD_{full}, and using **intra_tmp_idx** and **intra_tmp_frac_idx.**

At (2303), the prediction predBlock of the current luma CB may be computed by applying the fractional interpolation filtering parametrized by (*pₓ, p_{y}, d*) to a padded version refBlockPad of the reconstructed block refBlock with position 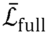 [**intra_tmp_idx**] within the current luma channel. For instance, if **intra_tmp_lic_flag** is false, the generation of predBlock may follow the following equation. $\left\{\begin{matrix}predBlock = clip \left(\left(\left(refBlockPad∗{f}_{{p}_{x} , d}\right)+\left(1≪7\right)\right)≫8,0,1023\right) , if d ∈ \left\{LEFT_POS, RIGHT_POS\right\} \\ predBlock = clip \left(\left(\left(refBlockPad∗{g}_{{p}_{y} , d}\right)+\left(1≪7\right)\right)≫8,0,1023\right) , if d ∈ \left\{ABOVE_POS, BOTTOM_POS\right\} \\ predBlock = clip \left(\left(\left(clip\left(\left(\left(refBlockPad∗{f}_{{p}_{x} , d}\right)+{o}_{0}\right)≫{s}_{0},0,1023\right)∗{g}_{{p}_{y} , d}\right)+{o}_{1}\right)≫{s}_{1},0,1023\right) otherwise .\end{matrix}\right.$

For example, if **intra_tmp_lic_flag** is true, the prediction of the current luma CB may be equal to clip ((α predBlock) >> 5) + *β,* 0, 1023), α and *β* being the learned LIC scale and offset respectively, predBlock coming from the previous equation. For example, the definition of the fractional interpolation filters may be selected from Table 6 and/or Table 7.

At (2304), the residual resBlock of the current luma CB may be decoded. The reconstruction recBlock of the current luma CB may be recBlock = predBlock + resBlock. Following this, in-loop filtering may apply.

At (2305), the decoding of the current luma CB predicted by the combination of ITMP and sub-pel may end.

**Table 3: example of learning the pair (pₓ, p_{y}, d) of parameters for a given luma CB selecting ITMP and sub-pel for prediction 0.**

| |
|---|
| 1. For the option without any fractional interpolation filtering, the template matching metric 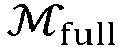 *=* SAD_{full} between the template of refBlock and the template of this given luma CB may be computed. |
| *2.* ∀(*pₓ, p_{y}, d*) ∈ 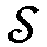 *,* i.e*.* for each of the card(S) possible filterings, the 4-tap version of this filtering may apply to a padded version of the template of refBlock, and the template matching metric 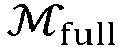 = SAD_{full} between the result of this filtering and the template of this given luma CB may be computed. card( 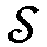 ) may represent the number of possible pairs of sub-pel parameter values in *S.* |
| 3. The triplets of parameters of the card(S) + 1 possible options tested in 1. and 2. may be sorted in ascending order of 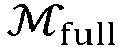 . |
| 4. The sub-list 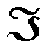 may gather the first two triplets of parameters from the previously sorted list. |
| 5. The triplet (*pₓ, p_{y}, d*) = 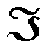 [**intra_tmp_frac_idx**] may be chosen to predict this given luma CB, **intra_tmp_frac_idx** ∈ {0, 1} being either inferred or read from the bitstream. |

**Table 4: example one-dimensional 8-tap horizontal fractional interpolation filter in the combination of ITMP and sub-pel.**

| | *d* ∈ {LEFT_POS, ABOVE_LEFT_POS, LEFT_BOTTOM_POS} | *d* ∈ {RIGHT_POS, ABOVE_RIGHT_POS, RIGHT_BOTTOM_POS} |
|---|---|---|
| ${f}_{\frac{1}{8} pel , d}$ | [-4,8, -20, 248, 32, -12, 4, 0] | [0, 4, -12, 32, 248, -20, 8, -4] |
| ${f}_{\frac{1}{4} pel , d}$ | [-4,16, -40, 232, 68, -20, 4, 0] | [0, 4, -20, 68, 232, -40, 16, -4] |
| ${f}_{\frac{3}{8} pel , d}$ | [-4,12, -36, 188, 124, -40, 16, -4] | [-4,16, -40, 124, 188, -36, 12, -4] |
| ${f}_{\frac{1}{2} pel , d}$ | [-4,16, -44, 160, 160, -44, 16, -4] | [-4,16, -44, 160, 160, -44, 16, -4] |

**Table 5: example one-dimensional 8-tap vertical fractional interpolation filter in the combination of ITMP and sub-pel.**

| | *d* ∈ {ABOVE_POS, ABOVE_LEFT_POS, ABOVE_RIGHT_POS} | *d* ∈ {BOTTOM_POS, LEFT_BOTTOM_POS, RIGHT _BOTTOM_POS} |
|---|---|---|
| ${g}_{\frac{1}{8} pel , d}$ | [[-4], [8], [-20], [248], [32], [-12], [4], [0]] | [[0], [4], [-12], [32], [248], [-20], [8], [-4]] |
| ${g}_{\frac{1}{4} pel , d}$ | [[-4], [16], [-40], [232], [68], [-20], [4], [0]] | [[0], [4], [-20], [68], [232], [-40], [16], [-4]] |
| ${g}_{\frac{3}{8} pel , d}$ | [[-4], [12], [-36], [188], [124], [-40], [16], [-4]] | [[-4], [16], [-40], [124], [188], [-36], [12], [-4]] |
| ${g}_{\frac{1}{2} pel , d}$ | [[-4], [16], [-44], [160], [160], [-44], [16], [-4]] | [[-4], [16], [-44], [160], [160], [-44], [16], [-4]] |

If the decoding of the current luma CB predicted via the combination of ITMP and sub-pel may follow one or more of the features described in FIG. 19, at (2302), and if the learning of the triplet (*pₓ, p_{y}, d*) ∈ 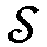 of sub-pel parameters involves Table 5, the 4-tap version *f̅* of the one-dimensional 8-tap horizontal fractional interpolation filter *f* may be defined as in Table 8. Otherwise, the 4-tap version *g̅* of the one-dimensional 8-tap vertical fractional interpolation filter *g* may be defined as in Table 9.

**Table 6: example one-dimensional 4-tap horizontal fractional interpolation filter in the combination of ITMP and sub-pel.**

| | *d* ∈ {LEFT_POS,ABOVE_LEFT_POS,LEFT_BOTTOM_POS} | *d* ∈ {RIGHT_POS, ABOVE_RIGHT_POS, RIGHT_BOTTOM_POS} |
|---|---|---|
| ${\overline{f}}_{\frac{1}{8} pel , d}$ | [-9, 236, 34, -5] | [-5, 34, 236, -9] |
| ${\overline{f}}_{\frac{1}{4} pel , d}$ | [-14, 210, 70, -10] | [-10, 70, 210, -14] |
| ${\overline{f}}_{\frac{3}{8} pel , d}$ | [-16, 179, 107, -14] | [-14,107,179, -16] |
| ${\overline{f}}_{\frac{1}{2} pel , d}$ | [-16, 144, 144, -16] | [-16, 144, 144, -16] |

**Table 7: example one-dimensional 4-tap vertical fractional interpolation filter in the combination of ITMP and sub-pel.**

| | *d* ∈ {LEFT_POS,ABOVE_LEFT_{_}POS,LEFT_BOTTOM_POS} | *d* ∈ {RIGHT_POS,ABOVE_RIGHT_POS, RIGHT_BOTTOM_POS} |
|---|---|---|
| ${\overline{g}}_{\frac{1}{8} pel , d}$ | [[-9], [236], [34], [-5]] | [[-5], [34], [236], [-9]] |
| ${\overline{g}}_{\frac{1}{4} pel , d}$ | [[-14], [210], [70], [-10]] | [[-10], [70], [210], [-14]] |
| ${\overline{g}}_{\frac{3}{8} pel , d}$ | [[-16], [179], [107], [-14]] | [[-14], [107], [179], [-16]] |
| ${\overline{g}}_{\frac{1}{2} pel , d}$ | [[-16], [144], [144], [-16]] | [[-16], [144], [144], [-16]] |

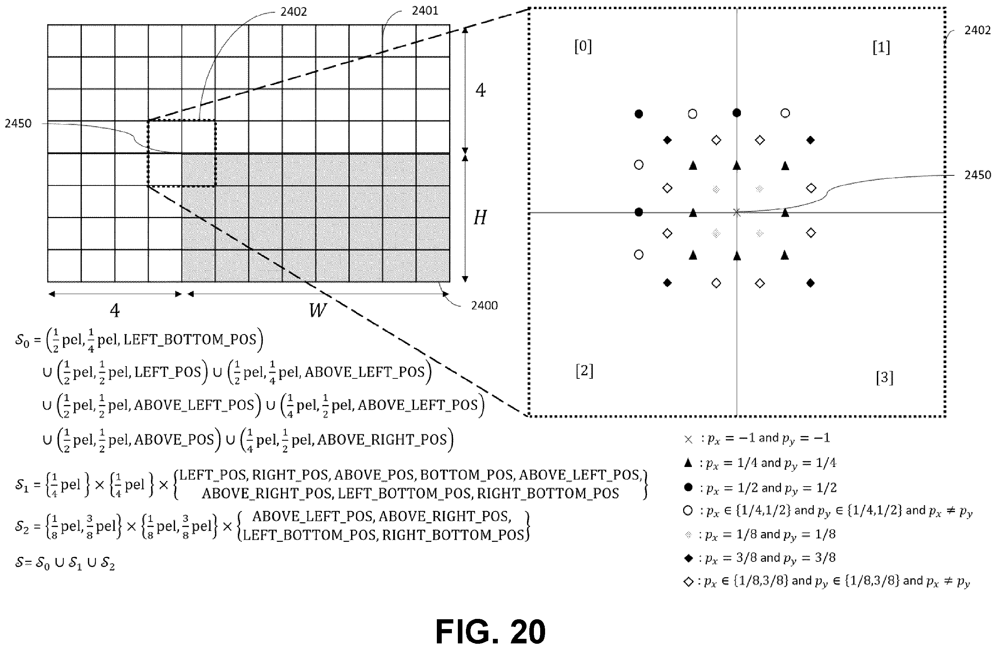

For example, FIG. 20 illustrates an example of domain 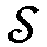 of sub-pel parameters for which the areas of sub-pel displacements for positions of reconstructed blocks belonging to the ITMP search area are disjoint. For the current *W* × *H* luma CB, (2450) may mark the position of the pixel at the top-left of the *W* × *H* refBlock (2400). (2401) may label the template of (2400). (2402) may frame the 1-pel neighborhood around (2450). A symbol belonging to the square [0] in (2402) and being placed on neither the horizontal axis nor the vertical axis may feature *d* = ABOVE_LEFT_POS.

A symbol belonging to the square [1] in (2402) and being placed on neither the horizontal axis nor the vertical axis may feature *d* = ABOVE_RIGHT_POS. A symbol belonging to the square [2] in (2402) and being placed on neither the horizontal axis nor the vertical axis may feature *d =* LEFT_BOTTOM_POS. A symbol belonging to the square [3] in (2402) and being placed on neither the horizontal axis nor the vertical axis may feature *d* = RIGHT_BOTTOM_POS. A symbol placed on the left half of the horizontal axis in (2402) may feature *d* = LEFT_POS. A symbol placed on the right half of the horizontal axis in (2402) may feature *d* = RIGHT_POS. A symbol placed on the top half of the vertical axis in (2402) may feature *d* = ABOVE_POS. A symbol placed on the bottom half of the vertical axis in (2402) may feature *d* = BOTTOM_POS.

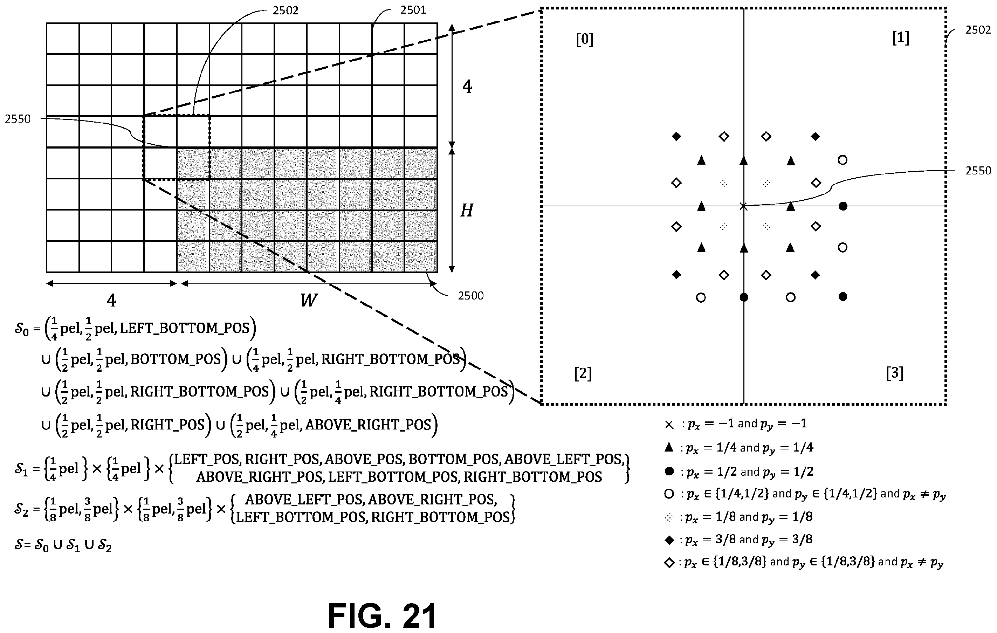

In an example, FIG. 21 illustrates another example of domain 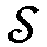 of sub-pel parameters for which the areas of sub-pel displacements for positions of reconstructed blocks belonging to the ITMP search area are disjoint. The descriptions of (2500), (2501), (2502), and (2550) may copy the descriptions of (2400), (2401), (2402), and (2450) respectively in FIG. 20.

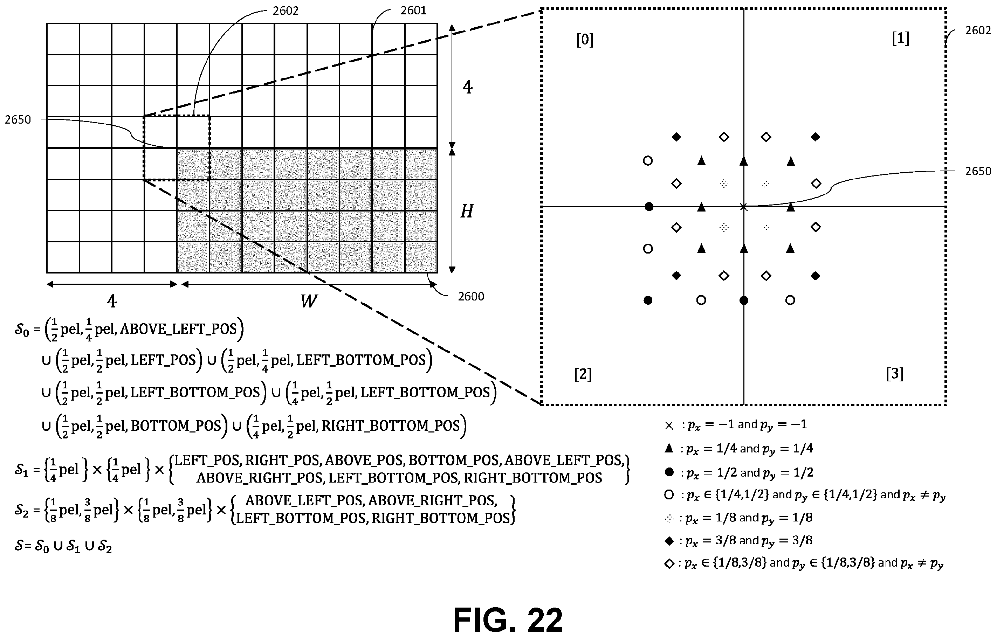

In an example, FIG. 22 illustrates another example of domain 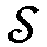 of sub-pel parameters for which the areas of sub-pel displacements for positions of reconstructed blocks belonging to the ITMP search area are disjoint. The descriptions of (2600), (2601), (2602), and (2650) may copy the descriptions of (2400), (2401), (2402), and (2450) respectively in FIG. 20.

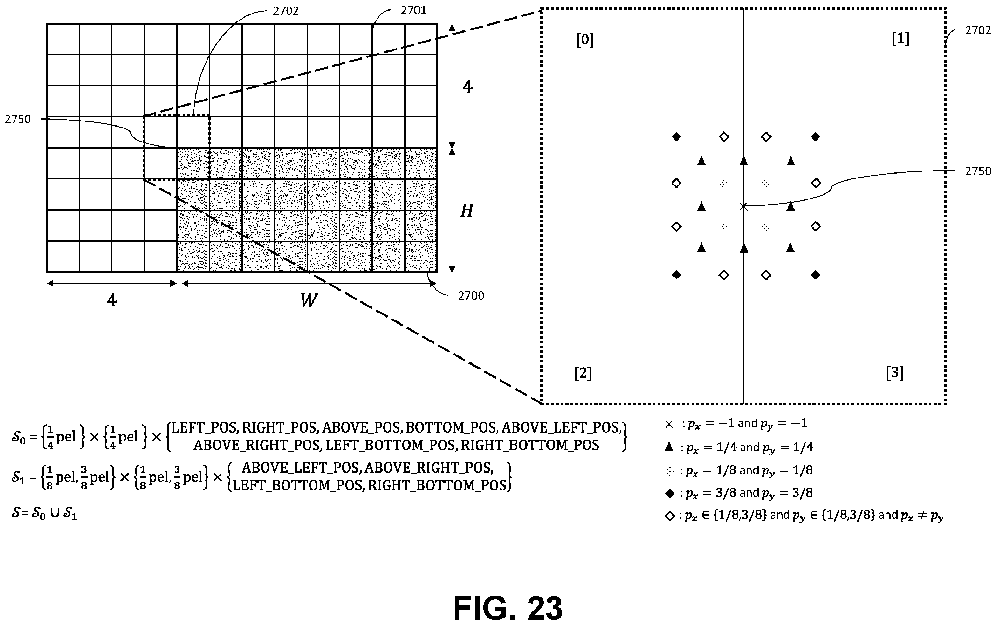

In an example, FIG. 23 illustrates another example of domain 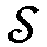 of sub-pel parameters for which the areas of sub-pel displacements for positions of reconstructed blocks belonging to the ITMP search area are disjoint. The descriptions of (2700), (2701), (2702), and (2750) may copy the descriptions of (2400), (2401), (2402), and (2450) respectively FIG. 20.

Fractional interpolation filtering may be parametrized via a (e.g., any) tuple of parameters.

The domain 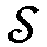 of sub-pel parameters may be defined such that the areas of sub-pel displacements for positions of reconstructed blocks belonging to the ITMP search area are disjoint and the fractional interpolation filtering is parametrized via a tuple 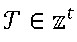 of parameters, $t ∈ ℕ$.

Feature(s) associated with hierarchical learning of the sub-pel parameters are provided herein.

The domain 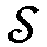 of sub-pel parameters may be defined such that the areas of sub-pel displacements for positions of reconstructed blocks belonging to the ITMP search area are disjoint and a hierarchical learning of the sub-pel parameters is used. In this case, the step of learning the sub-pel parameters may include a sparse sub-pel search and at least one refined sub-pel search. This hierarchical learning of sub-pel parameters may draw from the motion vector search in in inter prediction. Features herein may be combined. For example, at (2302) in FIG. 19, Table 5 may be replaced by Table 10. Table 10, at 2, may correspond to the sparse sub-pel search. Table 10, at 4, may correspond to the refined sub-pel search. For example, *l* = 2. As another example, *l* = 1. As another example, *l* = 3. In an example, *q* = 8. If *q =* 8, in 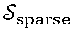 , *pₓ* and *p_{y}* may take values in $\left\{\frac{1}{4}pel,\frac{1}{2}pel\right\}$ (e.g., exclusively, for example, 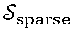 being equal to 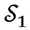 as defined in FIG. 21). In an example, *q* = 16. If *q* = 16, in 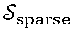 , *pₓ* and *p_{y}* may take values in $\left\{\frac{1}{8}pel,\frac{1}{4}pel,\frac{3}{8}pel\right\}$ (e.g., exclusively, for example, 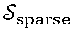 being equal to 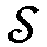 as defined in FIG. 23).

**Table 8: example of learning the tuple (pₓ, p_{y}, d) of parameters for a given luma CB selecting ITMP and sub-pel for prediction.**

| |
|---|
| 1. For the option without any fractional interpolation filtering, the template matching metric 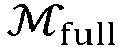 *=* SAD_{full} between the template of refBlock and the template of this given luma CB is computed. |
| *2. ∀*(*pₓ, p_{y}, d*) ∈ 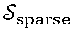 , i.e. for each of the card( 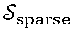 ) possible filterings, the 4-tap version of this filtering applies to a padded version of the template of refBlock, and the template matching metric 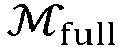 = SAD_{full} between the result of this filtering and the template of this given luma CB is computed. card( 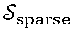 ) represents the number of possible pairs of sub-pel parameter values in 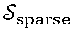 . |
| 3. The triplets of parameters of the card( 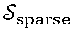 ) + 1 possible options tested in 1. and 2. are sorted in ascending order of 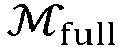 . |
| 4. For each of the *l* displaced positions associated to the first *l* triplets of parameters from the previously sorted list, for each 1/*q* pel displacement from this displaced position in a different direction, the 4-tap version of this filtering applies to a padded version of the template of refBlock, and the template matching metric 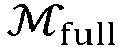 = SAD_{full} between the result of this filtering and the template of this given luma CB is computed. The sorted list may be updated accordingly. |
| 4. The sub-list 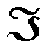 gathers the first two triplets of parameters from the previously updated sorted list. |
| 5. The triplet (*pₓ, p_{y}, d*) = 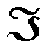 [**intra_tmp_frac_idx**] is chosen to predict this given luma CB, **intra_tmp_frac_idx** ∈ {0, 1} being either inferred or read from the bitstream. |

Feature(s) described herein may be combined in any conceivable combination.

The learning of the sub-pel parameters may be skipped if sub-pel is signaled as unused.

In some hybrid block-based video codecs (e.g., codecs that support the combination of ITMP and sub-pel), for the current block predicted by the combination of ITMP and sub-pel, the learning of the sub-pel parameters may be skipped if sub-pel is signaled as unused.

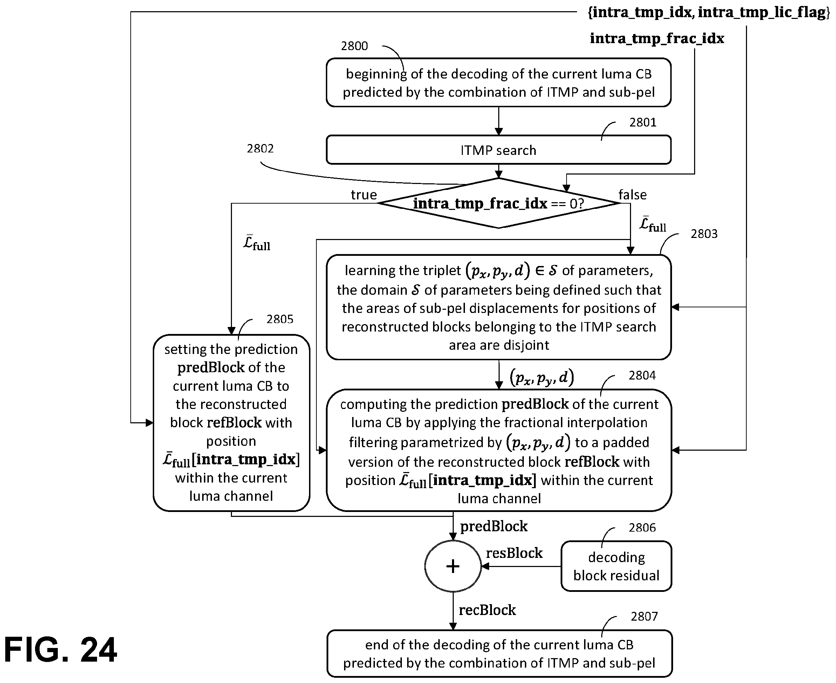

The learning of the sub-pel parameters may be skipped when sub-pel is signaled as unused. For example, FIG. 24 illustrates an example combination of features described herein. In FIG. 24, as the current luma CB may be predicted via the combination of ITMP and sub-pel, **intra_tmp_flag** may be true, **intra_tmp_fusion_flag** may be false, and **intra_tmp_filter_flag** may be false.

At (2800), the decoding of the current luma CB predicted via the combination of ITMP and sub-pel may begin. At (2801), the ITMP search may be run, returning 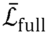 . For example, for the current luma CB, the ITMP search range depicted in FIG. 5 may be used. At (2802), if **intra_tmp_frac_idx** is equal to 0, the process may move to (2805). Otherwise, the process may advance to {(2803), (2804)}.

At (2803), the triplet (*pₓ, p_{y},d*) ∈ 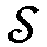 of sub-pel parameters may be learned. The domain *S* of sub-pel parameters may be defined such that the areas of sub-pel displacements for positions of reconstructed blocks belonging to the ITMP search area may be disjoint. For example, if **intra_tmp_lic_flag** is false, the learning process may reproduce Table 11 using **intra_tmp_idx.** For example, if **intra_tmp_lic_flag** is true, the learning process may reproduce Table 11 but with 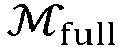 = MRSAD_{full}, and using **intra_tmp_idx.**

At (2804), the prediction predBlock of the current luma CB may be computed by applying the fractional interpolation filtering parametrized by (*pₓ, p_{y}, d*) to a padded version refBlockPad of the reconstructed block refBlock with position 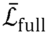 [**intra_tmp_idx**] within the current luma channel. For instance, if **intra_tmp_lic_flag** is false, the generation of predBlock may be performed as described herein. For instance, if **intra_tmp_lic_flag** is true, the prediction of the current luma CB may be equal to clip ((α predBlock) >> 5) + *β*, 0, 1023), α and *β* being the learned LIC scale and offset respectively (e.g., predBlock being generated as described herein). For example, the definition of the fractional interpolation filters may be picked from Table 6 and/or Table 7.

At (2805), if **intra_tmp_lic_flag** is false, predBlock may be set to the reconstructed block refBlock with position 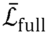 [**intra_tmp_idx**] within the current luma channel. If **intra_tmp_lic_flag** is true, predBlock = clip (((α refBlock) >> 5) + *β*, 0, 1023), α and *β* being the learned LIC scale and offset, respectively.

At (2806), the residual resBlock of the current luma CB may be decoded. The reconstruction recBlock of the current luma CB may be recBlock = predBlock + resBlock. Following this, in-loop filtering may apply. At (2807), the decoding of the current luma CB predicted by the combination of ITMP and sub-pel may end.

**Table 9: learning of the pair (pₓ, p_{y}, d) of parameters for a given luma CB selecting ITMP and sub-pel for prediction.**

| |
|---|
| *1.* ∀(*pₓ, p_{y}, d*) ∈ 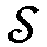 *,* i.e. for each of the card(S) possible filterings, the 4-tap version of this filtering applies to a padded version of the template of refBlock, and the template matching metric 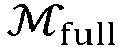 = SAD_{full} between the result of this filtering and the template of this given luma CB is computed. card( 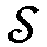 ) represents the number of possible pairs of sub-pel parameter values in 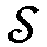 *.* |
| 2. The triplets of parameters of the card(S) possible options tested in 1. are sorted in ascending order of 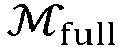 . |
| 3. The sub-list 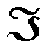 gathers the first triplet of parameters from the previously sorted list. |
| . The triplet (*pₓ, p_{y},d*) *=* 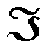 [0] is chosen to predict this given luma CB. |

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, the device comprising:
a processor configured to:
select a sub-pixel (sub-pel) parameter from a set of sub-pel parameters, wherein the set of sub-pel parameters is defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block;
determine a prediction of a current block based on at least the sub-pel parameter; and
decode the current block based on the prediction.

2. A device for video encoding, the device comprising:
a processor configured to:
select a sub-pixel (sub-pel) parameter from a set of sub-pel parameters, wherein the set of sub-pel parameters is defined such that a first intra template matching prediction (ITMP) search area of sub-pel displacements associated with a first pixel position in a template of a reconstructed block is disjoint from a second ITMP search area of sub-pel displacements associated with a second pixel position in the template of the reconstructed block;
determine a prediction of a current block based on at least the sub-pel parameter; and
encode the current block based on the prediction.

3. The device of claim 1 or 2, wherein the sub-pel parameter comprises a first parameter indicative of a fractional precision and a second parameter indicative of a direction.

4. The device of claim 1 or 2, wherein the sub-pel parameter comprises a first parameter indicative of a horizontal fractional precision, a second parameter indicative of a vertical fractional precision, and a third parameter indicative of a direction.

5. The device of any one of claims 1-4, wherein the first sub-pel displacements comprise displacements in only a first quadrant of the first ITMP search area of first sub-pel displacements, wherein the second sub-pel displacements comprise displacements in only a second quadrant of the second ITMP search area of second sub-pel displacements, and wherein the first quadrant and the second quadrant are a same quadrant within the first ITMP search area and the second ITMP search area, respectively.

6. The device of any one of claims 1-4, wherein the first sub-pel displacements comprise displacements at 1/4 pel from the first pixel position and displacements at 3/8 pel from the first pixel position, and wherein the second sub-pel displacements comprise displacements at 1/4 pel from the second pixel position and displacements at 3/8 pel from the second pixel position.

7. The device of any one of claims 1-4, wherein the first sub-pel displacements comprise displacements at 1/4 pel from the first pixel position and displacements at 1/8 pel from the first pixel position, and wherein the second sub-pel displacements comprise displacements at 1/4 pel from the second pixel position and displacements at 1/8 pel from the second pixel position.

8. The device of claim 1, wherein the current block is a first current block, the sub-pel parameter is a first sub-pel parameter, and the processor is further configured to:
receive an indication of whether sub-pel is used for a second current block;
on a condition that the indication indicates that sub-pel is unused for the second current block, refrain from determining a second sub-pel parameter for the second current block; and
on a condition that the indication indicates that sub-pel is used for the second current block:
select a second sub-pixel parameter from the set of sub-pel parameters;
determine a prediction of the second current block based on the second sub-pel parameter; and
decode the second current block based on the prediction.

9. The device of any one of claims 1-7, wherein the processor is further configured to perform an intra template matching prediction (ITMP) search of a plurality of templates, wherein the plurality of templates comprises the template of the reconstructed block, wherein the ITMP search identifies the reconstructed block, and wherein determining the prediction of the current block is further based on the reconstructed block.

10. The device of claim 2, wherein the processor being configured to select the sub-pel parameter from the set of sub-pel parameters comprises the processor being configured to:
determine respective sums of absolute difference (SADs) between a plurality of reconstructed block templates and a template of the current block, wherein the plurality of templates comprises the template of the reconstructed block
sort the respective SADs in order from smallest SAD to largest SAD; and
select the sub-pel parameter based on the sub-pel parameter being associated with one of two of the respective SADs with the smallest SAD; and
include, in a bitstream, the encoded current block and an indication of the sub-pel parameter.

11. A method for video decoding, the method comprising:
selecting a sub-pixel (sub-pel) parameter from a set of sub-pel parameters, wherein the set of sub-pel parameters is defined such that a first intra template matching prediction (ITMP) search area of first sub-pel displacements associated with a first pixel position in a template of a reconstructed block is disjoint from a second ITMP search area of second sub-pel displacements associated with a second pixel position in the template of the reconstructed block;
determining a prediction of a current block based on at least the sub-pel parameter; and
decoding the current block based on the prediction.

12. A method for video encoding, the method comprising:
selecting a sub-pixel (sub-pel) parameter from a set of sub-pel parameters, wherein the set of sub-pel parameters is defined such that a first intra template matching prediction (ITMP) search area of sub-pel displacements associated with a first pixel position in a template of a reconstructed block is disjoint from a second ITMP search area of sub-pel displacements associated with a second pixel position in the template of the reconstructed block;
determining a prediction of a current block based on at least the sub-pel parameter; and
encoding the current block based on the prediction.

13. The method of claim 11 or 12, wherein the sub-pel parameter comprises a first parameter indicative of a fractional precision and a second parameter indicative of a direction.

14. The method of claim 11 or 12, wherein the sub-pel parameter comprises a first parameter indicative of a horizontal fractional precision, a second parameter indicative of a vertical fractional precision, and a third parameter indicative of a direction.

15. The method of any one of claims 11-14, wherein the first sub-pel displacements comprise displacements in only a first quadrant of the first ITMP search area of first sub-pel displacements, wherein the second sub-pel displacements comprise displacements in only a second quadrant of the second ITMP search area of second sub-pel displacements, and wherein the first quadrant and the second quadrant are a same quadrant within the first ITMP search area and the second ITMP search area, respectively.
